# EUROPEAN PATENT APPLICATION

(11) **EP 4 836 458 A1**
(43) Date of publication of application: **04.11.2026**
(21) Application number: 24923435.2
(22) Date of filing: 04.11.2024
(51) Int. Cl.: H04W 4/08

(54) **COMMUNICATION METHOD AND APPARATUS**

(30) Priority: 07.02.2024 CN 202410175960
(71) Applicant: Huawei Technologies Co., Ltd., Shenzhen, Guangdong 518129 (CN)
(72) Inventor: GE, Cuili, Shenzhen, Guangdong 518129 (CN)
(74) Representative: Isarpatent
(86) International application number: PCT/CN2024/129743
(87) International publication number: WO 2025/167231

(57) **Abstract**

This application provides a communication method and apparatus, which are applied to the field of communication technologies, and can flexibly implement an update operation for users in a group call, accurately add or remove a user, and improve communication efficiency of the group call. The method may include: A terminal sends a first message to a network device, where the first message is for updating users in a first group call, and the first message includes an identity of a to-be-added user and a user attribute of the to-be-added user, and/or an identity of a to-be-removed user and a user attribute of the to-be-removed user. The network device updates the users in the first group call based on the first message.

## Description

This application claims priority to Chinese Patent Application No. 202410175960.5, filed with the China National Intellectual Property Administration on February 7, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Mission critical (Mission Critical, MC) communication, also referred to as critical mission communication, refers to communication services that meet critical communication requirements, and are used to support trunking communication in public safety scenarios, to provide high-quality, high-reliability, and high-security voice, video, and data communication. MC communication services include a mission critical push-to-talk (Mission Critical push-to-talk, MCPTT) service, a mission critical video (Mission Critical Video, MCVideo) service, and a mission critical data (Mission Critical Data, MCData) service, which respectively correspond to a voice service, a video service, and a data service in MC communication.

Currently, an MC communication connection between a terminal user and a server may be established through an ad hoc group communication (ad hoc group call) mode. Specifically, a call initiating user may send an ad hoc group call request to an MC server, to select a group of called users to enter an ad hoc group. The call initiator may provide a user list of the called users or user criteria (criteria) to the MC server, so that the MC server may initiate a group call request to users in the user list or to a group of selected users filtered out according to the criteria. Subsequently, the call initiating user may modify the user list of the called users, for example, adding or removing a user. In addition, the initiator or another authorized user may modify or update the user criteria, so that the MC server can continuously filter users in a group based on updated criteria, for example, removing a user that does not meet the criteria, and adding another user that meets the criteria.

However, the foregoing implementations all have some limitations to some extent, and cannot meet diversified requirements of users. In the group call manner based on a user list, it is difficult to add, to a group, all related users that meet a specific condition. For example, for users in an area, the user list continuously changes due to user movement. In addition, when a quantity of users in the user list is large, the user list is long, resulting in a large corresponding indication overheads. Conversely, the group call manner based on user criteria is not accurate and flexible enough. When the call initiator needs to add or remove one or more specific users, the call initiator cannot implement the addition or removal by adding criteria or updating the criteria.

### SUMMARY

This application provides a communication method and apparatus, to flexibly implement an update operation for users in a group call, and accurately add or remove a user, thereby improving communication efficiency of the group call.

To achieve the foregoing objective, this application uses the following technical solutions.

According to a first aspect, a communication method is provided. The method may be performed by a terminal, or may be performed by a module (for example, a chip or a circuit) of the terminal. The method includes: generating a first message, where the first message is for updating users in a first group call, and the first message includes an identity of a to-be-added user and a user attribute of the to-be-added user, and/or an identity of a to-be-removed user and a user attribute of the to-be-removed user; and sending the first message to a network device.

In the foregoing implementation, a terminal side includes a corresponding user attribute for a to-be-added user and/or a to-be-removed user in a request message for updating users in a group call. In this way, a conflict between two manners of updating participating users in the group call by a server, namely, update based on a user list and update based on a user criterion, no longer exists, the two update manners may be both implemented, and a user may flexibly add a user to the group call or remove a user from the group call in the two manners with no contradiction or conflict. This improves flexibility and update efficiency of updating users in the group call, thereby improving user experience.

In an implementation, if the user attribute of the to-be-added user is a first attribute, the first attribute indicates at least one of the following information: the to-be-added user is an essential user in the first group call; the to-be-added user is kept in the first group call before the first group call ends; the to-be-added user cannot be removed before the first group call ends; or a user criterion corresponding to the first group call is not applied to the to-be-added user, where the user criterion is used by the network device to update users in the first group call.

In the foregoing implementation, the terminal may set the user attribute of the to-be-added user to the first attribute, so that the server may update the to-be-added user based on the first attribute, and a user criterion added to the first group call before or after the update is not applied to the user having the first attribute. Therefore, the user added based on the user list is no longer removed from the group call due to affection of the user criterion, thereby improving flexibility and update efficiency of updating users in the group call.

In an implementation, if the user attribute of the to-be-removed user is a second attribute, the second attribute indicates at least one of the following information: the to-be-removed user is a released user in the first group call; the to-be-removed user is no longer an essential user in the first group call; the to-be-added user is not allowed to be added by the network device to the first group call based on the user criterion corresponding to the first group call; or the user criterion corresponding to the first group call is not applied to the to-be-removed user, where the user criterion is used by the network device to update users in the first group call.

In the foregoing implementation, the terminal may set the user attribute of the to-be-removed user to the second attribute, so that the server may remove the to-be-removed user from the first group call based on the second attribute, and a user criterion added to the first group call before or after the remove is not applied to the user having the second attribute. Therefore, the user removed based on the user list is no longer automatically added to the first group call due to affection of the user criterion, thereby improving flexibility and update efficiency of updating users in the group call.

In an implementation, the method further includes: sending a second message to the network device, where the second message includes an identity of at least one target user, and the second message is for requesting the first group call to be set up and the target user to be added to the first group call.

In an implementation, the second message further includes a first attribute corresponding to the target user.

In an implementation, the method further includes: sending a third message to the network device, where the third message includes information about a first criterion, the third message is for requesting the first group call to be set up, the first criterion is one of user criteria, and the first criterion is for adding, to the first group call, a user that meets the first criterion, and removing, from the first group call, a participating user that does not meet the first criterion.

In an implementation, the third message further includes first information, where the first information indicates that a target user selected based on the first criterion is an essential user in the first group call.

In an implementation, the third message further includes second information, where the second information indicates that an attribute of the first criterion is read-only or modifiable.

In an implementation, the method further includes: sending a fourth message to the network device, where the fourth message includes information about a second criterion or includes update information of the first criterion, the second criterion or the update information is for updating users in the first group call, the second criterion is one of the user criteria, and the second criterion is for adding, to the first group call, a user that meets the second criterion, and removing, from the first group call, a participating user that does not meet the second criterion.

In an implementation, the method further includes: receiving, from the network device, a response message indicating a user update result in the first group call.

According to a second aspect, a communication method is provided. The method may be performed by a network device, or may be performed by a module (for example, a chip or a circuit) of the network device. The method includes: receiving a first message from a first terminal, where the first message is for updating users in a first group call, and the first message includes an identity of a to-be-added user and/or an identity of a to-be-removed user; and determining a user attribute of the to-be-added user, and adding the to-be-added user to the first group call based on the first message; and/or determining a user attribute of the to-be-removed user, and removing the to-be-removed user from the first group call based on the first message.

In the foregoing implementation, a function of a network device side is enhanced, so that the network device may automatically generate a corresponding user attribute for a to-be-added user and/or a to-be-removed user based on a user list in an initial setup or update request message (for example, the first message). In this way, a conflict between two manners of updating participating users in a group call by a server, namely, update based on the user list and update based on a user criterion, no longer exists, the two update manners may be both implemented, and a user may flexibly add a user to the group call or remove a user from the group call in the two manners with no contradiction or conflict. This improves flexibility and update efficiency of updating users in the group call, thereby improving user experience.

In an implementation, if the user attribute is a first attribute, the first attribute indicates at least one of the following information: the to-be-added user is an essential user in the first group call; the to-be-added user is kept in the first group call before the first group call ends; the to-be-added user cannot be removed before the first group call ends; or a user criterion corresponding to the first group call is not applied to the to-be-added user, where the user criterion is used by the network device to update users in the first group call.

In an implementation, if the user attribute is a second attribute, the second attribute indicates at least one of the following information: the to-be-removed user is a released user in the first group call; the to-be-removed user is no longer an essential user in the first group call; the to-be-removed user is not allowed to be added by the network device to the first group call based on the user criterion corresponding to the first group call; or the user criterion corresponding to the first group call is not applied to the to-be-removed user, where the user criterion is used by the network device to update users in the first group call.

In an implementation, the first message includes the user attribute of the to-be-added user and/or the user attribute of the to-be-removed user.

In an implementation, determining the user attribute of the to-be-added user includes: generating, based on the first message for the to-be-added user, a first attribute of the to-be-added user, and/or generating, based on the first message for the to-be-removed user, a second attribute of the to-be-removed user.

In an implementation, the method further includes: receiving a second message from the first terminal or a second terminal, where the second message includes an identity of at least one target user, and the at least one target user includes a user associated with the first terminal; and adding the target user to the first group call, and setting up the first group call.

In an implementation, the second message further includes a first attribute corresponding to the target user.

In an implementation, the method further includes: receiving a third message from the first terminal or a second terminal, where the third message includes information about a first criterion; and adding, to the first group call, a target user that meets the first criterion, and setting up the first group call.

In an implementation, the method further includes: updating participating users in the first group call, adding, to the first group call, the target user that meets the first criterion, and removing, from the first group call, a user that does not meet the first criterion; if a user attribute corresponding to a first user in the first group call is the first attribute, keeping the first user in the first group call; and if a second user meets the first criterion, and a user attribute corresponding to the second user is the second attribute, removing the second user from the first group call, or skipping adding the second user to the first group call.

In an implementation, the third message further includes second information indicating that an attribute of the first criterion is read-only or modifiable.

In an implementation, the method further includes: receiving a fourth message from a terminal, where the fourth message includes information about a second criterion and/or includes update information of the first criterion; and based on the second criterion or the update information, adding, to the first group call, a target user that meets the second criterion or the update information, and removing, from the first group call, a participating user that does not meet the second criterion.

In an implementation, the method further includes: storing a user list corresponding to the first group call, and a user attribute corresponding to a user in the user list; storing the first attribute in the first group call and a user list corresponding to the first attribute; storing the second attribute in the first group call and a user list corresponding to the second attribute; and/or storing at least one user criterion corresponding to the first group call, and first information corresponding to the user criterion, where the first information indicates that a target user determined based on the user criterion is an essential user in the first group call.

In an implementation, the method further includes: sending, to the first terminal, a response message indicating a user update result in the first group call.

According to a third aspect, a communication method is provided. The method may be performed by a terminal, or may be performed by a module (for example, a chip or a circuit) of the terminal. The method includes: sending a first message to a network device, where the first message includes information about a first criterion and third information, the third information indicates to deactivate the first criterion corresponding to a first group call, and the first criterion is for adding, to the first group call, a user that meets the first criterion, and removing, from the first group call, a participating user that does not meet the first criterion; and sending a second message to the network device, where the second message is for updating users in the first group call, the second message includes an identity of a to-be-added user and/or includes an identity of a to-be-removed user, and the first criterion is invalid for the to-be-added user and the to-be-removed user.

In the foregoing implementation, the terminal may request the network device to modify or set an activation status of a user criterion in a group call, so that the user criterion is in an inactive state in a period of time. In this way, an authorized terminal may flexibly update participating users in the group call as required, for example, add or remove a user based on a user list, without being affected by the user criterion. This improves flexibility of updating participating users in the group call, and improves communication efficiency of the group call, thereby improving user experience.

In an implementation, the to-be-added user meets at least one of the following: the to-be-added user is an essential user in the first group call; the to-be-added user is kept in the first group call before the first group call ends; the to-be-added user cannot be removed before the first group call ends; or the first criterion is not applied to the to-be-added user.

In an implementation, the to-be-removed user meets at least one of the following: the to-be-removed user is a released user in the first group call; the to-be-removed user is no longer an essential user in the first group call; the to-be-added user is not allowed to be added by the network device to the first group call based on the first criterion; or the first criterion is not applied to the to-be-removed user.

In an implementation, the method further includes: sending a third message to the network device, where the third message includes the information about the first criterion and fourth information, and the fourth information indicates to activate the first criterion corresponding to the first group call.

In an implementation, the method further includes: receiving, from the network device, a response message that includes an active state of the first criterion.

According to a fourth aspect, a communication method is provided. The method may be performed by a network device, or may be performed by a module (for example, a chip or a circuit) of the network device. The method includes: receiving a first message from a terminal, where the first message includes information about a first criterion and third information, the third information indicates to deactivate the first criterion, and the first criterion is for adding, to a first group call, a user that meets the first criterion, and removing, from the first group call, a participating user that does not meet the first criterion; receiving a second message from the terminal, where the second message is for updating users in the first group call, and the second message includes an identity of at least one to-be-added user and/or includes an identity of at least one to-be-removed user; and adding the to-be-added user to the first group call based on the second message, where the to-be-added user is an essential user in the first group call; and/or removing the to-be-removed user from the first group call.

In an implementation, the to-be-added user meets at least one of the following: the to-be-added user is an essential user in the first group call; the to-be-added user is kept in the first group call before the first group call ends; the to-be-added user cannot be removed before the first group call ends; or the first criterion is not applied to the to-be-added user.

In an implementation, the to-be-removed user meets at least one of the following: the to-be-removed user is a released user in the first group call; the to-be-removed user is no longer an essential user in the first group call; the to-be-added user is not allowed to be added by the network device to the first group call based on the first criterion; or the first criterion is not applied to the to-be-removed user.

In an implementation, if the to-be-added user does not meet the first criterion, a first user is kept in the first group call; and if the to-be-removed user meets the first criterion, the to-be-removed user is removed from the first group call, or the to-be-removed user is not added to the first group call.

In an implementation, the method further includes: updating a status of the first criterion to an inactive state.

In an implementation, the method further includes: receiving a third message from the terminal, where the third message includes the information about the first criterion and fourth information, and the fourth information indicates to activate the first criterion; and adding, to the first group call, a user that meets the first criterion, removing, from the first group call, a participating user that does not meet the first criterion, and updating a status of the first criterion to an active state.

In an implementation, the method further includes: sending, to an authorized terminal in the first group call, a response message that includes the active state of the first criterion.

According to a fifth aspect, a communication apparatus is provided to implement the foregoing method. The communication apparatus may be the terminal in the first aspect or the third aspect, the network device in the second aspect or the fourth aspect, a node or a device including the network device or the terminal, a module in the network device or the terminal, for example, a chip, a chip system, or a circuit, or a logical node, a logical module, or software that can implement all or part of functions.

The communication apparatus includes a corresponding module, unit, or means (means) for implementing the foregoing methods. The module, unit, or means may be implemented by hardware, software, or hardware executing corresponding software. The hardware or the software includes one or more modules or units corresponding to the foregoing functions.

With reference to the fifth aspect, in a possible implementation, the communication apparatus may include a processing module and a transceiver module. The processing module may be configured to implement a processing function in any one of the foregoing aspects and any possible implementations thereof. The processing module may be, for example, a processor. The transceiver module may also be referred to as a transceiver unit, and is configured to implement a sending function and/or a receiving function in any one of the foregoing aspects and any possible implementations thereof. The transceiver module may include a transceiver circuit, a transceiver machine, a transceiver, or a communication interface.

With reference to the fifth aspect, in a possible implementation, the transceiver module includes a sending module and a receiving module, which are respectively configured to implement the sending function and the receiving function in any one of the foregoing aspects and any possible implementations thereof.

According to a sixth aspect, a communication apparatus is provided, and includes a processor. The processor is configured to: after being coupled to a memory and reading instructions in the memory, perform, according to the instructions, the method in any one of the foregoing aspects. The communication apparatus may be the terminal in the first aspect or the third aspect, the network device in the second aspect or the fourth aspect, a node or a device including the network device or the terminal, a module in the network device or the terminal, for example, a chip, a chip system, or a circuit, or a logical node, a logical module, or software that can implement all or part of functions.

With reference to the sixth aspect, in a possible implementation, the communication apparatus further includes the memory. The memory is configured to store necessary program instructions and data.

With reference to the sixth aspect, in a possible implementation, the communication apparatus is a chip or a chip system. Optionally, when the communication apparatus is the chip system, the communication apparatus may include a chip, or may include a chip and another discrete device.

According to a seventh aspect, a communication apparatus is provided, and includes a processor and an interface circuit. The interface circuit is configured to receive a computer program or instructions, and transmit the computer program or the instructions to the processor. The processor is configured to execute the computer program or the instructions, to cause the communication apparatus to perform the method in any one of the foregoing aspects. The communication apparatus may be the terminal in the first aspect or the third aspect, the network device in the second aspect or the fourth aspect, a node or a device including the network device or the terminal, a module in the network device or the terminal, for example, a chip, a chip system, or a circuit, or a logical node, a logical module, or software that can implement all or part of functions.

With reference to the seventh aspect, in a possible implementation, the communication apparatus is a chip or a chip system. Optionally, when the communication apparatus is the chip system, the communication apparatus may include a chip, or may include a chip and another discrete device.

According to an eighth aspect, a computer-readable storage medium is provided. The computer-readable storage medium stores instructions. When the instructions are run on a computer, the computer is caused to perform the method in any one of the foregoing aspects.

According to a ninth aspect, a computer program product including instructions is provided. When the computer program product runs on a computer, the computer is caused to perform the method in any one of the foregoing aspects.

According to a tenth aspect, a communication system is provided. The communication system includes the terminal configured to perform any possible implementation of the first aspect, and includes the network device configured to perform any possible implementation of the second aspect. Alternatively, the communication system includes the terminal configured to perform any possible implementation of the third aspect, and includes the network device configured to perform any possible implementation of the fourth aspect.

For technical effects brought by any one of the possible implementations of the second aspect to the tenth aspect, refer to technical effects brought by the different possible implementations of the first aspect. Details are not described herein again.

It may be understood that the solutions in the foregoing aspects may be combined if the solutions are not contradictory.

### BRIEF DESCRIPTION OF DRAWINGS

FIG. 1 is a diagram of an architecture of a communication system according to an embodiment of this application;
FIG. 2 is a diagram of a manner of establishing or updating ad hoc group communication according to an embodiment of this application;
FIG. 3 is a diagram of an architecture of a communication apparatus according to an embodiment of this application;
FIG. 4 is a schematic flowchart of a communication method according to an embodiment of this application;
FIG. 5 to FIG. 8 are a first schematic flowchart to a fourth schematic flowchart of another communication method according to an embodiment of this application; and
FIG. 9 is a diagram of a structure of another communication apparatus according to an embodiment of this application.

### DESCRIPTION OF EMBODIMENTS

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of embodiments, unless otherwise specified, "a plurality of" means two or more.

It should be noted that in this application, a term like "example" or "for example" is used to represent giving an example, an illustration, or a description. Any embodiment or design solution described as an "example" or "for example" in this application should not be explained as being more preferred or having more advantages than another embodiment or design solution. Exactly, use of the term like "example" or "for example" is intended to present a related concept in a specific manner.

The following clearly and completely describes the technical solutions in embodiments of this application with reference to the accompanying drawings in embodiments of this application. It is clear that the described embodiments are merely some but not all of embodiments of this application. All other embodiments obtained by an ordinary person skilled in the art based on embodiments of this application without creative efforts shall fall within the protection scope of this application.

An implementation environment and an application scenario of embodiments of this application are briefly described first.

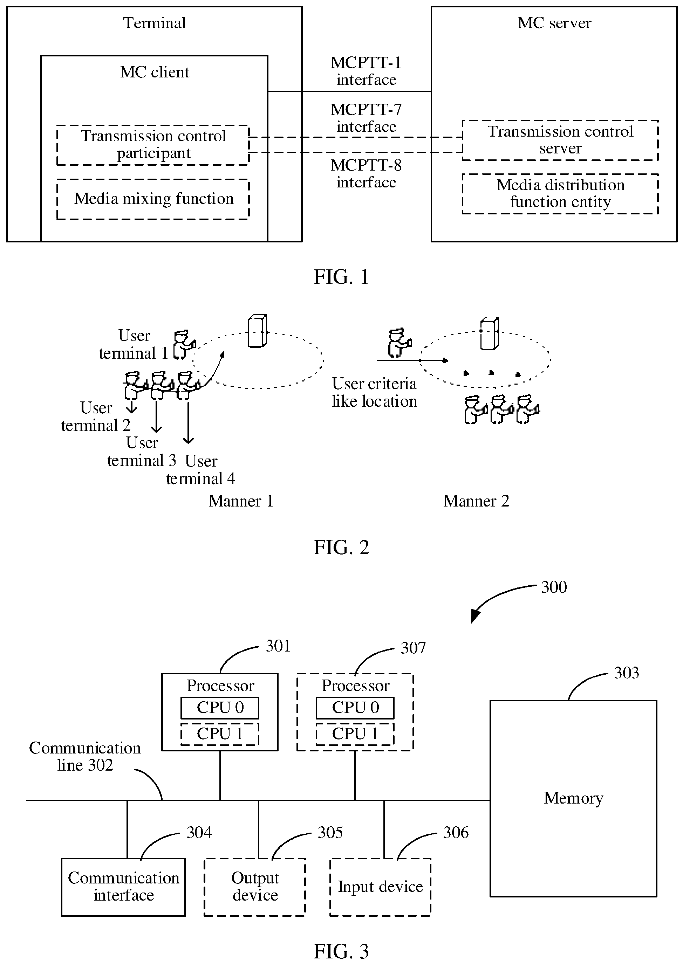

A communication method provided in embodiments of this application may be applied to an MC communication system shown in FIG. 1. As shown in FIG. 1, the communication system may include an MC server (Mission Critical Service Server, MC Service Server/MC server) and a terminal. An MC client (Mission Critical Service Client, MC Service Client/MC client) may be installed or integrated on the terminal.

The terminal is a device having a wireless transceiver function, and may also be sometimes referred to as user equipment (User Equipment, UE), a terminal device, a mobile station, a mobile terminal, an access terminal device, an in-vehicle terminal, an industrial control terminal, a UE unit, a UE station, a mobile station, a remote station, a remote terminal device, a mobile device, a UE terminal device, a wireless communication device, a machine terminal, a UE agent, a UE apparatus, or the like. The terminal may be fixed or mobile. The terminal may be deployed on the land, including an indoor device, an outdoor device, a handheld device, a wearable device, or a vehicle-mounted device; may be deployed on the water (for example, on a ship); or may be deployed in the air (for example, on an airplane, a balloon, and/or a satellite). The terminal may be a mobile phone (mobile phone), a tablet computer (Pad), a computer having a wireless transceiver function, a virtual reality (virtual reality, VR) terminal device, an augmented reality (augmented reality, AR) terminal device, a terminal in industrial control (industrial control), a vehicle-mounted terminal device, a terminal in self-driving (self-driving), a terminal in assisted driving, a terminal in remote medical (remote medical), a terminal in a smart grid (smart grid), a terminal in transportation safety (transportation safety), a terminal in a smart city (smart city), a terminal in a smart home (smart home), or the like. The application scenario is not limited in embodiments of this application.

The MC server is mainly responsible for processing such as call control and media control, service authorization, or user registration, and may be a logical entity. During specific implementation, different MC services may correspond to different MC servers. For example, MC servers corresponding to an MCPTT service, an MCVideo service, and an MCData service may be respectively an MCPTT server, an MCVideo server, and an MCData server. Alternatively, processing functions of different MC services may be integrated into a same server. This is not limited in this application.

The MC client is mainly responsible for processing of application-layer transactions, including service registration, security authentication, authorization, call control, location management, media processing, or the like. The MC client may be a software program module on the terminal, and may be used as a system application of an operating system of the terminal, a post-installed application (Application, APP), a runtime library in software, or a software development kit (Software development kit, SDK). An MC user may be a user (user) who uses an MC terminal to complete an MC task, where the MC terminal is a terminal on which an MC application is installed. The MC user may use the MC terminal to communicate with the MC server.

For example, the MC client may interact with the MC server via an MCPTT-1 interface (or referred to as a reference point), to implement call setup, update, release, and the like, or to implement location management, for example, accepting location reporting configuration of the MC server, and reporting location information to the MC server. In addition, the MC client may interact with the MC server via an MCPTT-7/8 interface, to implement media processing, such as receiving, sending, encoding, or decoding of media data. The MC client may receive broadcast/multicast data via MCPTT-8.

Optionally, as shown in FIG. 1, the MC server may include a transmission control server (Transmission control server, or floor control server), which is a media transmission control entity on a media plane and is mainly responsible for uplink and/or downlink media transmission control. In the following embodiments of this application, a network device (or a server) sends transmission control signaling to a terminal, or the network device (or the server) receives transmission control signaling from the terminal. Unless otherwise specified, the network device (or the server) may be specifically a transmission control server.

Optionally, as shown in FIG. 1, the MC server may include a media distribution function (Media distribution function) entity, which may be a logical entity and is responsible for receiving uplink media data and sending downlink media data. In the following embodiments of this application, the terminal sends media data to the network device (or the server), or the network device (or the server) sends media data to the terminal. Unless otherwise specified, the network device (or the server) may be specifically a media distribution function entity.

Optionally, as shown in FIG. 1, the MC client may include a transmission control participant (Transmission control participant/Floor participant), which is a media transmission control entity on a media plane, is responsible for uplink and/or downlink media transmission control, and may serve as a peer entity of a media control server on a terminal side.

Optionally, as shown in FIG. 1, the MC client may include a media mixing function (Media mixer), which is responsible for media packet processing and may be used as a peer entity of the media distribution function entity on the terminal side.

MC communication may include an ad hoc group communication (Ad hoc group call) mode, and an MC communication connection between a terminal user and the MC server may be established. Specifically, a call initiating user may send an ad hoc group call request (or an ad hoc group call update request) to the MC server, and select a group of called users who are to enter an ad hoc group.

Specifically, the ad hoc group communication mode currently has two setup/update manners:

Manner 1: A call initiating user terminal may provide a user list of the called users (for example, a user list)for the MC server. For example, as shown in FIG. 2, a user terminal 1 requests the MC server to initiate a group call, where a carried user list may include specified user terminals, such as a user terminal 2, a user terminal 3, and a user terminal 4. The MC server may trigger, based on the user list, a request to the user terminals to access the group call, to implement an ad hoc group communication service.

Manner 2: A call initiating user terminal or an authorized user terminal may provide a user criterion (criteria), so that the MC server may automatically determine, based on the user criterion, a group of users that meet the criterion to initiate a group call request, and add the group of users to a group call. For example, as shown in FIG. 2, the user criterion may be specifically a location condition. The MC server may add, to the group call, a user that meets the location condition, and remove, from the group call, a user that does not meet the location condition.

For example, based on the communication system shown in FIG. 1, the terminal 1 may send an ad hoc group communication request (for example, ad hoc group call request) message to the MC server. The request message carries the user list shown in Manner 1, and is for requesting the MC server to add a user to the group call based on the user list. Alternatively, the request message may carry the user criterion shown in Manner 2, and is for requesting the MC server to automatically add a user to the group call or remove a user from the group call based on the user criterion. Then, the MC server may send an ad hoc group communication request to user terminals such as the terminal 2 and the terminal 3 based on the ad hoc group communication request. In this case, the group call is successfully set up, and a media plane and a floor control plane are established. Users in the group call may perform ad hoc communication by using a floor control mechanism.

Subsequently, the call initiating user terminal or the authorized user terminal may modify the user list in the group call, for example, add or remove a user. In addition, the call initiating user terminal or the authorized user terminal may modify or update the user criterion, so that the MC server can continuously perform user filtering in a group based on an updated criterion, for example, remove a user that does not meet the criterion, and add another user that meets the criterion.

However, in actual application, the foregoing implementations are all limited to some extent, and cannot meet diversified requirements of users. In the group call manner based on the user list, it is difficult to add, to a group, all related users that meet a specific condition. For example, for users in an area, the user list continuously changes due to user movement. In addition, when a quantity of users in the user list is large, the user list is long, and corresponding indication overheads are high. The group call manner based on the user criterion is not accurate and flexible enough. When needing to add or remove one or more specific users, the call initiator cannot implement the addition or removal by adding a criterion or updating the criterion.

It should be understood that the communication system shown in FIG. 1 in this application is merely used as an example, and is not intended to limit the technical solutions of this application. A person skilled in the art should understand that, during specific implementation, the communication system may further include another network element or device, and a quantity of nodes may be determined based on a specific requirement. This is not limited.

Optionally, each network element or device in FIG. 1 in this application may also be referred to as a communication apparatus, and may be a general-purpose device or a dedicated device. This is not specifically limited in this application.

Optionally, a related function of each network element or device in FIG. 1 in this application may be implemented by one device, may be jointly implemented by a plurality of devices, or may be implemented by one or more functional modules in one device. This is not specifically limited in this application. It may be understood that the foregoing function may be a network element in a hardware device, or may be a software function running on dedicated hardware, or a combination of hardware and software, or a virtualization function instantiated on a platform (for example, a cloud platform).

During specific implementation, each network element or device in FIG. 1 in this application may be of a composition structure shown in FIG. 3, or include components shown in FIG. 3. FIG. 3 is a diagram of a hardware structure of a communication apparatus to which this application is applicable. A communication apparatus 300 includes at least one processor 301 and at least one communication interface 304, to implement the method provided in this application. The communication apparatus 300 may further include a communication line 302 and a memory 303.

The processor 301 may be a general-purpose central processing unit (central processing unit, CPU), a microprocessor, an application-specific integrated circuit (application-specific integrated circuit, ASIC), or one or more integrated circuits configured to control execution of programs in the solutions in this application.

The communication line 302 may include a path on which information is transferred between the foregoing components, for example, a bus.

The communication interface 304 is configured to communicate with another device or a communication network. The communication interface 304 may be any apparatus such as a transceiver, for example, may be an Ethernet interface, a radio access network (radio access network, RAN) interface, a wireless local area network (wireless local area network, WLAN) interface, a transceiver, a pin, a bus, or a transceiver circuit.

The memory 303 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a magnetic disk storage medium or another magnetic storage device, or any other medium that can carry or store expected program code in a form of instructions or a data structure and that can be accessed by a computer, but is not limited thereto. The memory may exist independently, and is coupled to the processor 301 through the communication line 302. The memory 303 may alternatively be integrated with the processor 301. The memory provided in this application may be usually non-volatile.

The memory 303 is configured to store computer-executable instructions for executing the solutions provided in this application, and the processor 301 controls execution. The processor 301 is configured to execute the computer-executable instructions stored in the memory 303, to implement a method provided in this application. Alternatively, optionally, in this application, the processor 301 may perform functions related to processing in a method provided in the following embodiments of this application, and the communication interface 304 is responsible for communication with another device or a communication network. This is not specifically limited in this application.

Optionally, the computer-executable instructions in this application may also be referred to as application program code. This is not specifically limited in this application.

The coupling in this application may be an indirect coupling or a communication connection between apparatuses, units, or modules in an electrical form, a mechanical form, or another form, and is used for information exchange between the apparatuses, the units, or the modules.

In an embodiment, the processor 301 may include one or more CPUs, for example, a CPU 0 and a CPU 1 in FIG. 3.

In an embodiment, the communication apparatus 300 may include a plurality of processors, for example, the processor 301 and a processor 307 in FIG. 3. Each of the processors may be a single-core (single-CPU) processor, or may be a multi-core (multi-CPU) processor. The processor herein may be one or more devices, circuits, and/or processing cores configured to process data (for example, computer program instructions).

In an embodiment, the communication apparatus 300 may further include an output device 305 and/or an input device 306. The output device 305 is coupled to the processor 301, and may display information in a plurality of manners. For example, the output device 305 may be a liquid crystal display (liquid crystal display, LCD), a light emitting diode (light emitting diode, LED) display device, a cathode ray tube (cathode ray tube, CRT) display device, or a projector (projector). The input device 306 is coupled to the processor 301, and may receive an input of a user in a plurality of manners. For example, the input device 306 may be a mouse, a keyboard, a touchscreen device, or a sensor device.

It may be understood that the composition structure shown in FIG. 3 does not constitute a limitation on the communication apparatus. In addition to the components shown in FIG. 3, the communication apparatus may include more or fewer components than those shown in the figure, or some components may be combined, or different component arrangements may be used.

The following describes the method provided in this application with reference to the accompanying drawings. Network elements in the following embodiments may have the components shown in FIG. 3. Details are not described again.

It may be understood that names of messages between network elements, names of parameters in messages, or the like in the following embodiments of this application are merely examples, and there may alternatively be other names during specific implementation. This is not specifically limited in this application.

It may be understood that an "embodiment" used throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner. It may be understood that sequence numbers of the processes do not mean execution sequences in various embodiments of this application. The execution sequences of the processes should be determined based on functions and internal logic of the processes, and should not be construed as any limitation on implementation processes of this application.

It may be understood that, in this application, "when" and "if" mean that corresponding processing is performed in an objective situation, are not intended to limit time, do not necessarily require a determining action during implementation, and do not mean any other limitation.

"Simultaneously" in this application may be understood as being at a same time point, may be understood as being in a time period, or may be understood as being in a same period.

It may be understood that in some scenarios, some optional features in this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in this application may also correspondingly implement these features or functions. Details are not described herein.

It may be understood that, in this application, a same step, or steps or technical features that have a same function may be mutually referenced between different embodiments.

It may be understood that in this application, "sending information (for example, a first message) to (for example, a first apparatus)" may be understood as that a destination end of the information is the first apparatus, and may include directly or indirectly sending the information to the first apparatus. "Receiving information (for example, a first message) from (for example, a second apparatus)" may be understood as that a source end of the information is the second apparatus, and may include directly or indirectly receiving the information from the second apparatus. Information may undergo necessary processing, for example, a format change, between the source end for sending the information and the destination end. However, the destination end may understand valid information from the source end. A similar expression in this application may be understood similarly. Details are not described herein again.

It may be understood that, in the method provided below in this application, the method is illustrated by using an example in which a node and a communication apparatus are used as execution bodies of interaction illustration. However, the execution bodies of the interaction illustration are not limited in this application. For example, the method performed by the communication apparatus in this application may alternatively be performed by a module (for example, a chip, a chip system, or a processor) in a network device, or may be implemented by a logical node, a logical module, or software that can implement all or part of functions of the network device.

This application provides a communication method. A function of a terminal side is enhanced or a function of a server side is enhanced, so that flexible configuration and flexible update of participating users in a group call can be implemented by combining the foregoing two manners. For example, a terminal may set up a group call based on a user list, and may also update participating users in the group call based on a user criterion. The two manners are both implemented and do not conflict. Similarly, it can be learned that, the terminal may set up a group call based on a user criterion, and may also update participating users (for example, add or remove a user) in the group call by updating a user list. The two manners may be both implemented and do not conflict.

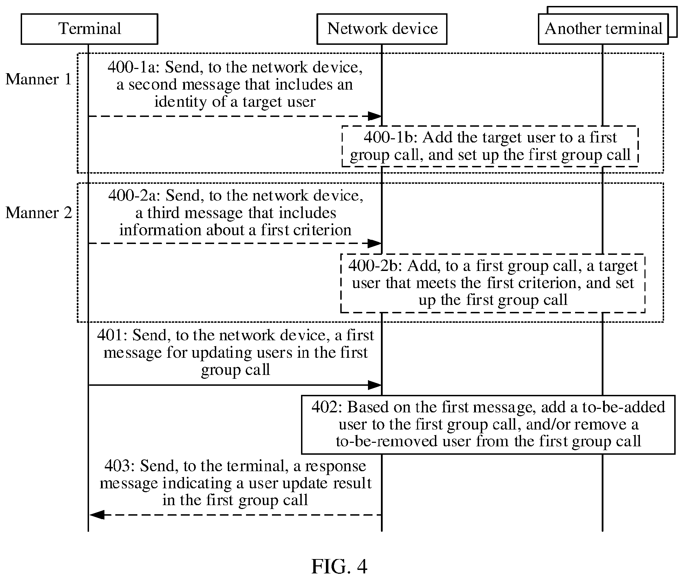

As shown in FIG. 4, a communication method provided in an embodiment of this application may be applied to a terminal and a network device. The network device may be the MC server in the communication system in FIG. 1, and the terminal may be a user terminal including the MC client in FIG. 1. The method may include the following steps.

401: The terminal sends, to the network device, a first message for updating users in a first group call.

Specifically, the terminal may generate the first message based on a service requirement of a group call, where the first message is for updating the users in the first group call, and the first message includes an identity of a to-be-added user and/or an identity of a to-be-removed user. Then, the terminal sends the first message to the network device.

For example, the first message may be specifically a group call setup request message for the first group call, for example, may be an ad hoc group communication request (for example, ad hoc group call request) message. In this case, the first message may include a list of to-be-added users (for example, a user list), and the user list may include identities of a plurality of to-be-added users. In this case, updating the users in the first group call may also be represented as/understood as creating the first group call and inviting a to-be-added user to join the call (or understood as creating the first group call by using the to-be-added user as an initial call user). The message may be implemented as an INVITE message of a session initiation protocol (Session initiation Protocol, SIP).

Alternatively, the first message may be a group call update request message for the first group call, and is for updating participating users (participant) in the first group call that has been set up. For example, the first message may be an ad hoc group communication update request (Modify ad hoc group call request) message, and indicates the network device to add a user to the group call or remove a participating user from the group call.

For example, the first message may include information about a to-be-added user, may include information about at least one to-be-added user, may be a list of to-be-added users (for example, a list of user to be added); or the first message may include information about a to-be-removed user, may include information about at least one to-be-removed user, or may be a list of users to be removed (for example, list of user to be removed); or the first message may include the information about the to-be-added user (for example, list of user to be added) and the information about the list of the to-be-removed user (for example, a list of user to be removed).

For the implementation in which the first message is the group call update request message, before step 401, an implementation process of setting up the first group call may be further included. An initiating terminal of the first group call may be the foregoing terminal like a first terminal, or may be another terminal like a second terminal. In other words, a call initiating user that initiates the first group call and a user that initiates subsequent participant update in the first group call may be the same user or different users. Generally, different users use different terminals, and there is also a scenario in which a terminal is shared, that is, the call initiating user and the user that initiates call participant update use the same terminal, that is, the terminal in 401. In the present invention, an example in which one user uses one terminal is used for description. Therefore, the terminal and the user may be interchangeably used. This is not limited in this application. In the following embodiments, implementation of a same terminal is merely used as an example, and does not constitute a limitation on implementations of this application.

Subsequently, steps 400-1a and 400-1b are used to describe a process of setting up a group call in a manner of providing a list of to-be-added users by the terminal, and steps 400-2a and 400-2b are used to describe a process of setting up a group call in a manner of providing a user criterion by the terminal. For example, the terminal may request the first group call to be set up based on a first criterion. The first criterion is used by a server to automatically add, to the first group call based on the first criterion, a user that meets the first criterion, and remove, from the first group call after the call is set up, a participating user that does not meet the first criterion. Details are not described herein.

In an implementation, a function of a terminal side is enhanced, so that the terminal may include a user attribute corresponding to a to-be-updated user in the first message, to indicate that an update operation performed by the network device on the user is not affected by the update manner based on the user criterion (that is, the server manages the participating users in the first group call based on the user criterion).

Optionally, the first message may further include a user attribute of the to-be-added user and/or a user attribute of the to-be-removed user. A user attribute may indicate a retention requirement or an update feature of a user (the to-be-added user and/or the to-be-removed user) in the first group call.

Specifically, the user attribute of the to-be-added user may be a first attribute, and the first attribute may indicate that the to-be-added user is an essential user in the first group call (for example, indicate that the user is always-in (always-in), keep-in, or required). In other words, the to-be-added user is an essential user in the first group call; the to-be-added user is kept (lasted, sustained, persisted, or preserved) in the first group call before the first group call ends; or the to-be-added user cannot be removed before the first group call ends. When the to-be-added user is successfully added to the first group call, the to-be-added user becomes a participating user in the first group call.

It should be understood that the first attribute may further indicate that any user criterion corresponding to the first group call is not applied to the to-be-added user, that is, any user criterion corresponding to the first group call is invalid for or not applied to the to-be-added user (a user marked with the first attribute). In other words, when the network device automatically performs user filtering based on the user criterion corresponding to the first group call, and updates participating users in the first group call, even if a terminal (for example, the terminal is successfully added to the group call as a to-be-added user and becomes a participating user) does not meet the user criterion, if the terminal is marked with the first attribute, it indicates that the terminal is an essential user in the first group call. Therefore, the network device may keep the terminal in the first group call, and does not remove the terminal by applying the user criterion to the terminal. Neither the currently existing user criterion corresponding to the first group call nor a user criterion that may be added to the first group call in the future is applied to the to-be-added user.

Correspondingly, the user attribute corresponding to the to-be-removed user may be a second attribute, and the second attribute may indicate that the to-be-removed user is a released user (for example, indicate to be removed or keep-out) in the first group call or a user that is removed unconditionally. The to-be-removed user is a participating user in the first group call. In other words, the to-be-removed user is no longer an essential user in the first group call.

It should be understood that the second attribute may further indicate that any user criterion corresponding to the first group call is not applied to the to-be-removed user, that is, any user criterion corresponding to the first group call is invalid for or not applied to the to-be-removed user (a user marked with the second attribute). In other words, the to-be-removed user is not allowed to be added by the network device to the first group call based on the user criterion corresponding to the first group call. Even if a terminal (for example, a to-be-removed user) meets the user criterion, if the terminal is marked with the second attribute, it indicates that the terminal is not an essential user in the first group call. Therefore, the network device may not add the terminal to the first group call. Neither the currently existing user criterion corresponding to the first group call nor the user criterion that may be added to the first group call in the future is applied to the to-be-removed user.

It should be noted that, when the to-be-removed user with the second attribute needs to be added to the first group call, the to-be-removed user may be added to the first group call again by another user/terminal based on a list of to-be-added users (add user list).

It should be understood that the foregoing plurality of descriptions of the first attribute or the second attribute may coexist, or one of the foregoing descriptions may be selected for implementation. This is not limited in this application.

It should be noted that, in the foregoing embodiment of this application, that the user attribute may be the first attribute or the second attribute is used as an example. The first attribute and the second attribute may be same information or different information. For example, in a specific implementation, a specific indicator bit may be set in the first message to indicate the first attribute and/or the second attribute.

For example, MCPTT is used as an example. The following Table 1 shows information elements included in an ad hoc group communication update request message in an MCPTT service.

**Table 1**

| Information element name | Status | Description |
|---|---|---|
| MCPTT identity (ID) | Mandatory | MCPTT ID of a calling party |
| MCPTT group call identity | Mandatory | Identity of an MCPTT group call whose participating user list needs to be modified |
| User list (to-be-added users) | Optional | List of users that need to be added to an ongoing MCPTT group call, which may include user identities |
| User list (to-be-removed users) | Optional | List of users that need to be deleted from the ongoing MCPTT group call, which may include user identities |
| User attribute | Optional | Indicates a user attribute of a to-be-added user or a to-be-removed user. If there is no affection of the user criterion, the information element may be valid for each user in the foregoing two user lists |

For an information element whose status is "optional" in Table 1, the ad hoc group communication update request message may carry or may not carry the information element. For an information element whose status is "mandatory", the ad hoc group communication update request message usually carries the information element. The following tables are also applicable, and details are not described again.

In Table 1, if a user attribute indicates that update of a user is not affected by the user criterion, for example, the user attribute is not distinguished between the first attribute and the second attribute, the user attribute may be valid for each user in the user list of to-be-added users and the user list of to-be-removed users in Table 1, that is, each user in the foregoing two user lists has the user attribute in the foregoing table.

Alternatively, the terminal may further indicate corresponding user attributes (per user) based on different users. The following Table 2 is used as an example. For example, a user may be identified by using an MCPTT ID, that is, the MCPTT ID is associated with a user attribute, and different users (MCPTT IDs) correspond to different user attributes. For example, by selecting some users as essential users in the group call via configuration on the MC client, the terminal may set user attributes of the selected users to the first attribute. In other words, in the to-be-added users, as shown in the following Table 2, some users have the first attribute, and some users may not have the user attribute like the first attribute. Alternatively, by selecting some users as to-be-removed users and non-essential users in the group call via configuration on the MC client, the terminal may set user attributes of the selected users to the second attribute. As shown in the following Table 2, in the to-be-removed users, some users have the user attribute like the second attribute, and some users may not indicate the user attribute like the second attribute.

**Table 2**

| Information element name | Status | Description |
|---|---|---|
| MCPTT identity (ID) | Mandatory | MCPTT ID of a calling party |
| MCPTT group call identity | Mandatory | Identity of an MCPTT group call whose participating user list needs to be modified |
| User list (to-be-added users) | Optional | List of users that need to be added to an ongoing MCPTT group call |
| >>User identity | Mandatory | User identity of a to-be-added user |
| >>User attribute | Optional | For example, the first attribute is valid for the user in the previous line. Some users may not have the user attribute |
| User list (to-be-removed users) | Optional | List of users that need to be deleted from the ongoing MCPTT group call |
| >>User identity | Mandatory | User identity of a to-be-removed user |
| >>User attribute | Optional | For example, the second attribute is valid for the user in the previous line. Some users may not have the user attribute |

In an implementation, the terminal may receive a selection of a user on an interaction interface of the MC client, and set user attributes of users in a group call. For example, the user may determine user attributes of users in a currently initiated group call through selection. For example, user attributes of some users may be selected as the first attribute, user attributes of some users may be selected as the second attribute, and some users do not have a user attribute.

Alternatively, in another example, the terminal may further indicate a corresponding user attribute based on a whole user list (per list). The following Table 3 is used as an example. For example, a user list of to-be-added users corresponds to the first attribute, and a user list of to-be-removed users corresponds to the second attribute. For example, the terminal may set, by default, user attributes for all user lists of an ad hoc group call (for example, ad hoc group call) service, for example, set a user attribute for the user list of to-be-added users, for example, set the user attribute to the first attribute by default; and set a user attribute for the user list of to-be-removed users, for example, set the user attribute to the second attribute by default.

**Table 3**

| Information element name | Status | Description |
|---|---|---|
| MCPTT identity (ID) | Mandatory | MCPTT ID of a calling party |
| MCPTT group call identity | Mandatory | Identity of an MCPTT group call whose participating user list needs to be modified |
| User list (to-be-added users) | Optional | List of users that need to be added to an ongoing MCPTT group call |
| >>User identity | Mandatory | User identity of a to-be-added user |
| User attribute | Optional | For example, the first attribute is valid for each user in the user list (to-be-added users) |
| User list (to-be-removed users) | Optional | List of users that need to be deleted from the ongoing MCPTT group call |
| >>User identity | Mandatory | User identity of a to-be-removed user |
| User attribute | Optional | For example, the second attribute is valid for each user in the user list (to-be-removed users) |

In an implementation, the terminal may request, in Manner 1 (specifying the user list) or Manner 2 (specifying the user criterion), the network device to set up the first group call, and send a group call setup request to the network device. For example, the first terminal or the second terminal sends a second message or a third message to the network device. Specifically, the following steps may be included.

400-1a: The terminal sends, to the network device, the second message that includes an identity of a target user.

400-1b: The network device adds the target user to the first group call, and sets up the first group call.

That the terminal sends the second message to the network device corresponds to the manner in which the group call is requested, based on the user list, to be set up in Manner 1. The second message may include an identity of at least one target user, and is for requesting the target user to be added to the first group call and the first group call to be set up.

Specifically, the network device receives the second message from the terminal, and sends a group call setup request to the corresponding target user (for example, at least one other terminal) based on the carried identity of the target user, for example, sends an ad hoc group communication request (for example, ad hoc group call request) message. The target user receives the group call setup request, and may feed back a group call setup response to the network device, for example, accept or reject access to the group call.

Further, the network device may allocate a group identity to the group call, and the group call setup request sent to the target user may carry the group identity. In an example, that the network device allocates the group identity to the group call may be considered as setting up the first group call and then adding the target user to the first group call. In another example, the network device allocates the group identity to the group call and adds all essential users to the first group call, which is considered as call setup completion. In another example, the network device allocates the group identity to the group call, adds all essential users to the first group call, and returns a response to the call setup request to the initiating user, which is considered as call setup completion. This is not specifically limited in this application.

For example, one group call corresponds to one piece of information that can uniquely identify the group call. For example, the first group call corresponds to a first identity, and the first identity may be generated by a user terminal that initiates a group call, or may be generated by the network device like the MC server. The first message in step 401 may carry the first identity, and indicate to update, based on the first identity, the participating users in the first group call corresponding to the first identity.

400-2a: The terminal sends, to the network device, the third message that includes information about the first criterion.

For example, the MC client on the terminal may provide a plurality of different user criteria for the user through interface presentation, and the user may click, select, and add the first criterion on a human-machine interaction interface. Optionally, a parameter value corresponding to the first criterion, for example, a parameter of a location area, may be further set.

Optionally, an attribute may be further set for the first criterion, and for example, may indicate that a target user added to a group call based on the first criterion also has an "always-in" attribute (for example, the first attribute) and cannot be removed based on that the target user does not meet another user criterion. In addition, the user may further set the first criterion to a read-only attribute (unmodifiable) or to be modifiable. The attribute can prevent a related parameter value of the first criterion from being modified.

400-2b: The network device adds, to the first group call, a target user that meets the first criterion, and sets up the first group call.

That the terminal sends the third message to the network device corresponds to the manner in which the terminal requests, based on the specific user criterion, the group call to be set up in Manner 2. The third message may include information about one or more user criteria, where the user criterion is used by the network device to automatically update participating users in a group call. For example, the third message may carry the information about the first criterion, and is for requesting the network device to automatically add, to the first group call, the target user that meets the first criterion, and set up the first group call.

Specifically, the network device receives the third message from the terminal, selects, based on the carried first criterion, the target user that meets the first criterion, and sends a group call setup request to the corresponding target user (for example, at least one other terminal), for example, sends an ad hoc group communication request (for example, ad hoc group call request) message. The target user receives the group call setup request, and may feed back a group call setup response to the network device, for example, accept or reject access to the group call.

For example, the user criterion (criteria) may indicate a location area. For example, the first criterion may carry longitude and latitude information corresponding to a location area or relative location information of a call initiating user terminal (for example, may be coordinates and a radius of the initiating user terminal, or may be coordinates and a radius that are specified). The network device may obtain a location of another terminal, and then determine, based on the location of the another terminal, whether the terminal is located in a location area specified by a user criterion. If the terminal is located in the specified location area, the network device may send a group call setup request to the target user terminal, and add the target user to the first group call.

In an implementation, the network device may continuously detect, within a lifecycle of the group call, a user that meets or does not meet the user criterion. For example, through periodic scanning or regular detection, the network device adds, to the first group call, the target user that meets the first criterion, and removes, from the first group call, a user that does not meet the first criterion.

Optionally, throughout the duration of the group call, the group call initiating user or another authorized user may modify the user criterion corresponding to the first group call, for example, may modify the related parameter value of the first criterion, for example, shrink or expand the location area, or modify longitude and latitude values. Modifying the user criterion causes the network device to re-evaluate participating users in the group call, to add, to the group call, some other users that meet a modified first criterion (which may be specifically sending an ad hoc group call request message), and remove, in group participants, some users that no longer meet the modified first criterion (which may be specifically sending an ad hoc group call remove or ad hoc group call leave request message).

402: Based on the first message, the network device adds the to-be-added user to the first group call, and/or removes the to-be-removed user from the first group call.

Correspondingly, the network device receives the first message from the terminal, and based on the first message, adds the to-be-added user to the first group call, and/or removes the to-be-removed user (which may be a participating user that a to-be-added user provided by the terminal becomes, or a participating user added by the network device to the call based on the user criterion) from the first group call.

The network device determines the user attribute of the to-be-added user, and/or determines the user attribute of the to-be-removed user.

In this embodiment of this application, that the network device determines the user attribute of the to-be-added/to-be-removed user may specifically include the following two manners.

Manner 1: A request message sent by the terminal carries the user attribute of the to-be-added user and/or carries the user attribute of the to-be-removed user. The request message sent by the terminal may be the first message and/or the second message.

In other words, in the foregoing implementation in which the function of the terminal side is enhanced, when the terminal sends a group call setup/update request message to the network device, the user attribute may be carried, so that the network device determines, based on the received user attribute, a user attribute corresponding to a user to perform a subsequent update operation or retention requirement.

For example, the first message may include: The user attribute of the to-be-added user is the first attribute, and/or the user attribute of the to-be-removed user is the second attribute.

Optionally, the second message in step 400-1a may also carry the user attribute, that is, the first group call is initially set up in the manner of specifying the user list. When sending the group call setup request message to the network device, the terminal may indicate the user attribute, for example, the first attribute, for all or part of to-be-added users.

Manner 2: The network device automatically generates a user attribute corresponding to a user based on a received request message sent by the terminal. The request message sent by the terminal may be the first message and/or the second message.

In other words, in the foregoing implementation in which the function of the network device side is enhanced, the network device may automatically generate the corresponding user attribute for the to-be-added user or the to-be-removed user carried in the request message based on the group call setup/update request message received from the terminal. The user attribute is for marking and indicates a subsequent update operation or retention requirement for the user.

For example, the network device may generate, based on the first message for the to-be-added user, the first attribute of the to-be-added user, and/or generate, based on the first message for the to-be-removed user, the second attribute of the to-be-removed user.

Optionally, for step 400-1b, when the terminal initially sets up the first group call in the manner of specifying the user list, the network device may automatically generate, based on the received second message, a second attribute corresponding to a user.

It should be noted that, for the user attribute generated by the network device side, for example, the first attribute marked for the to-be-added user and/or the second attribute marked for the to-be-removed user, refer to the foregoing related descriptions of the first attribute and the second attribute. Details are not described herein again.

In an implementation, the network device may store a user list corresponding to the first group call, and a user attribute corresponding to a user in the user list; the network device may store the first attribute in the first group call and a user list corresponding to the first attribute; and/or the network device may store the second attribute in the first group call and a user list corresponding to the second attribute.

Subsequently, when the network device regularly performs user filtering based on the user criterion like the first criterion, the network device may make a decision based on the stored related information of the user attributes, to update the participating users in the first group call. Specifically, the network device may add, to the first group call, the target user that meets the first criterion, and remove, from the first group call, the user that does not meet the first criterion. Further, the network device may store, in the user list corresponding to the first group call, the target user that meets the first criterion and an attribute of the target user (if the target user has the first attribute), or store, in the user list corresponding to the first attribute, the target user that meets the first criterion. That the network device removes, from the first group call, the user that does not meet the first criterion includes: The network device deletes, from the user list corresponding to the first group call, the user that does not meet the first criterion, or deletes, from the user list corresponding to the second attribute, the user that does not meet the first criterion. When different lists are used for different attributes, when the network device performs user update based on the attributes, the network device may perform an operation only on a specific attribute and a user list corresponding to the specific attribute, and does not check or process a user list corresponding to another attribute.

If a user attribute corresponding to a first user in the first group call is the first attribute, the first user is kept in the first group call. The first user may be a to-be-added user included in the first message in step 401, and is requested, by using the first message, to be added to the first group call. In an example, the user attribute corresponding to the first user is the first attribute. When the network device performs participating user filtering based on the first criterion, even if the first user does not meet the first criterion, the network device still keeps the first user in the first group call because the first user has the first attribute.

In addition, if a second user meets the first criterion, and a user attribute corresponding to the second user is the second attribute, the second user is removed from the first group call, or the network device is not allowed to add the second user to the first group call based on the first criterion. The second user may be a to-be-removed user included in the first message in step 401, and the second user is requested, by using the first message, to be removed from the first group call. Optionally, the second user having the second attribute may be added to the first group call by another user or terminal based on the list of to-be-added users (add user list).

In an implementation, after performing step 402, the network device may feed back an execution result to the terminal. The communication method may further include the following step.

403: The network device sends, to the terminal, a response message indicating a user update result in the first group call.

For example, the network device may send, to the terminal, a response to the first message, an acknowledgment (acknowledgment, ACK) response to the first message, or a notification message, to indicate that the update operation requested by the terminal is successfully completed or fails. Alternatively, the network device may send a negative acknowledgment (not acknowledge, NACK) response to the terminal, to indicate that the update operation requested by the terminal fails. Optionally, when the response message indicates that the update operation fails, the response message may further include a failure cause.

Alternatively, the network device may send, to the terminal, an identity of a user successfully added to the first group call, and/or an identity of a user successfully removed from the first group call. The network device may send the foregoing information to the terminal in the response message of the first message or a separate notification message. Further, the network device may include, together with the foregoing information, an identity corresponding to the first group call, for example, at least one of a group identity, a group call identity, or a group call session identity.

In the foregoing implementation, the terminal side includes a corresponding user attribute for a to-be-added user and/or a to-be-removed user in a request message for updating users in a group call, or the network device generates a corresponding user attribute for a to-be-added user and/or a to-be-removed user based on an initial setup or update request message. In the two implementations, a conflict between two manners of updating participating users in the group call by the server, namely, update based on a user list and update based on a user criterion, no longer exists, the two update manners may be both implemented, and a user may flexibly add a user to the group call or remove a user from the group call in the two manners with no contradiction or conflict. This improves flexibility and update efficiency of updating users in the group call, thereby improving user experience.

In addition, with reference to the foregoing manner of marking the first attribute for the to-be-added user, in a possible implementation, first information may be further marked for the user criterion corresponding to the group call, and indicates that a target user selected based on the first criterion is an essential user in the first group call. In this way, any user attribute corresponding to the target user added to the first group call based on the first criterion is the first attribute, that is, the target user is an essential user in the first group call, and does not need to be removed from the first group call by applying another user criterion.

For example, when the terminal initially sets up the group call, in step 400-2a, the terminal sends, to the network device, the third message that includes the information about the first criterion, where the third message may further include the first information indicating that the target user selected based on the first criterion is an essential user in the first group call. For example, the first information is set to always-in (always-in).

In addition, for the user criterion in the group call, an authorized user in the group call may modify the user criterion or add another user criterion. For example, the group call initiating user terminal like the first terminal configures the first criterion in the first group call. Subsequently, throughout the duration of the group call, the second terminal may update the first criterion, for example, modify the parameter value of the location area, or the second terminal may add, to the first group call, a second criterion for updating participating users in the first group call.

In an implementation, the communication method may further include the following step.

The terminal may send a fourth message to the network device, where the fourth message includes information about the second criterion or includes update information of the first criterion, the information about the second criterion or the update information is for updating users in the first group call, the second criterion is one of user criteria, and the information about the second criterion is for adding, to the first group call, a user that meets the second criterion, and removing, from the first group call, a participating user that does not meet the second criterion.

In an implementation, the third message further includes second information, where the second information indicates that an attribute of the first criterion is read-only or modifiable. The network device may store the second information. If the attribute of the first criterion is read-only, the network device cannot subsequently update the first criterion. If the attribute of the first criterion is modifiable, the network device may subsequently modify the first criterion based on the update information of the first criterion, so that the network device may perform participating user filtering in the first group call based on an updated first criterion, to add a target user that meets the updated first criterion, and remove a user that does not meet the updated first criterion.

For example, for a parameter 1 corresponding to the original first criterion, the update information of the first criterion may indicate to modify the parameter 1 corresponding to the first criterion to a parameter 2.

Further, optionally, the second information may further indicate information about a user authorized to modify the first criterion, for example, a user identity.

For example, if the fourth message sent by the second terminal to the network device includes the update information of the first criterion, the network device may determine whether the first criterion is allowed to be modified and whether the first criterion is allowed to be modified by the second terminal. If determining that the first criterion is allowed to be modified by the second terminal, the network device may update the first criterion based on the update information, and update the participating users in the first group call based on the updated first criterion.

With reference to a specific implementation process, the following describes several implementations provided in this application by using an MCPTT service as an example and by using interaction between a terminal (which may be specifically an MC client) and a server (which may be specifically an MC server) as an example.

Embodiment 1: A terminal side adds a user attribute to a to-be-added user and/or a to-be-removed user.

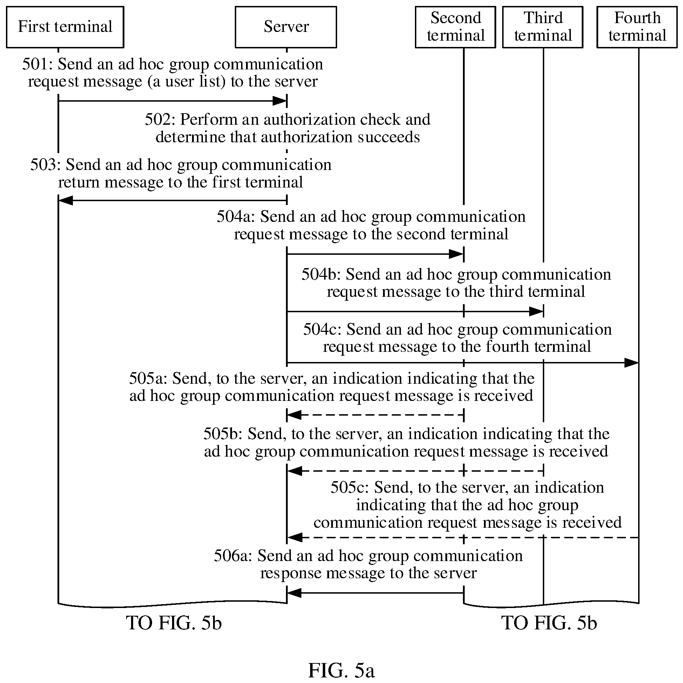

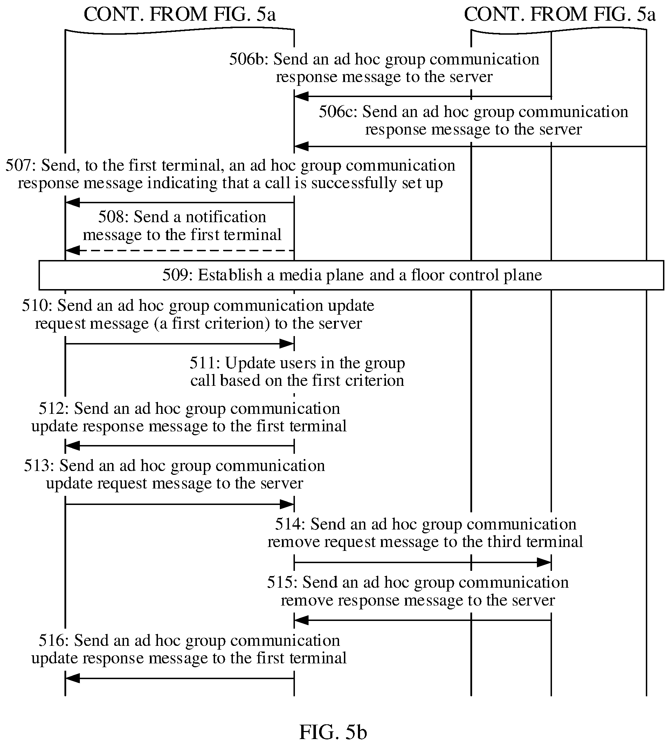

As shown in FIG. 5a and FIG. 5b, the communication method may include the following steps.

501: A first terminal sends an ad hoc group communication request message to a server.

A group call initiating user terminal, namely, the first terminal, sends the ad hoc group communication request (ad hoc group call request) message to the server, where the request includes a list of users that need to be added to a group call, and is for requesting the group call to be set up.

For example, the user list may include user identities corresponding to a second terminal, a third terminal, and a fourth terminal.

Optionally, the request may include that user attributes corresponding to all users in the user list each are a first attribute, or the request may include that user attributes corresponding to some users in the user list each are the first attribute. The first attribute indicates that a user is an essential user in a currently initiated group call and is not allowed to be removed from the group call by applying the user criterion. For other functions of indication information about the first attribute, refer to the foregoing content. Details are not described herein again.

502: The server performs an authorization check and determines that authorization succeeds.

Specifically, the server performs an authorization check on the request message, and when determining that the first terminal is authorized to execute the request, determines that the authorization succeeds.

In addition, the server stores a group call identity (ad hoc group ID), for example, an identity of a first group call, and stores a corresponding user list and a related user attribute. The group call identity may be carried in the request message in step 501, or may be automatically configured by the server.

503: The server sends an ad hoc group communication return message to the first terminal.

Specifically, the server may return the ad hoc group communication return (ad hoc group call request return) message to the group call initiating user terminal, namely, the first terminal, where the return message may include the group call identity (ad hoc group ID) and an authorization result.

Optionally, the return message may further include a preconfigured group identity (group ID), where the group identity indicates that configuration information of ad hoc group communication uses configuration information of a preconfigured group.

504a: The server sends an ad hoc group communication request message to the second terminal.

504b: The server sends an ad hoc group communication request message to the third terminal.

504c: The server sends an ad hoc group communication request message to the fourth terminal.

Specifically, the server may send the ad hoc group communication request message to users in the user list in step 501, to request access to the group call. The request message may include the group call identity (ad hoc group ID) and the preconfigured group identity (group ID).

505a: The second terminal sends, to the server, an indication indicating that the ad hoc group communication request message is received.

505b: The third terminal sends, to the server, an indication indicating that the ad hoc group communication request message is received.

505c: The fourth terminal sends, to the server, an indication indicating that the ad hoc group communication request message is received.

506a: The second terminal sends an ad hoc group communication response message to the server.

The response message indicates that the second terminal accepts or rejects the group call.

506b: The third terminal sends an ad hoc group communication response message to the server.

The response message indicates that the third terminal accepts or rejects the group call.

506c: The fourth terminal sends an ad hoc group communication response message to the server.

The response message indicates that the fourth terminal accepts or rejects the group call.

507: The server sends, to the first terminal, an ad hoc group communication response message indicating that the call is successfully set up.

Optionally, the response message may further include information such as a user terminal that has joined the group call session, a user terminal that does not join the group call session, or a user terminal that rejects accepting the group call.

508: The server sends a notification message to the first terminal.

Optionally, if a user that is specified by the first terminal and that needs to join the group call does not respond to the group call in specified time, the server may notify, by using the notification message, the first terminal of specified users that do not respond to the call in the specified time.

509: Establish a media plane and a floor control plane.

The media plane and the floor control plane are established. Users in the group call may speak and perform group communication by using a floor control mechanism.

510: The first terminal sends an ad hoc group communication update request message to the server.

Based on a service requirement of group communication, the first terminal expects update of participating users in the current first group call, and the update may be performed based on a first criterion, or a list of to-be-added users and/or a list of to-be-removed users.

For example, step 510 in this embodiment is described by using an update manner of adding the first criterion as an example. The following step 513 is described by using an update manner of adding the list of to-be-added users/to-be-removed users as an example.

For example, the ad hoc group communication update request message may include information about the first criterion. Specifically, the ad hoc group communication update request message may be a modify ad hoc group call criteria message or a modify ad hoc group call participant message.

Optionally, the ad hoc group communication update request message may further include first information, where the first information indicates that a target user determined based on the first criterion is an essential user in the first group call.

Optionally, the server may store the first criterion corresponding to the first group call and the first information corresponding to the first criterion.

511: The server updates users in the group call based on the first criterion.

Specifically, based on the first criterion, the server adds, to the first group call, a user that meets the first criterion, and removes, from the first group call, a participating user that does not meet the first criterion. Specifically, the following several types of processing may be included.
1. For a user marked with a first attribute, the server does not apply the first criterion to the user.

In other words, if a first user is marked with the first attribute, even if the first user does not meet the first criterion, the server does not remove the first user from the first group call, that is, the server keeps the first user in the first group call.

For example, the server may first determine, based on a stored user list corresponding to the first attribute, that a user attribute of the first user is the first attribute, and then the server may no longer perform verification on the first user based on the first criterion, and keep the first user in the first group call.

Alternatively, the server may first perform, based on the first criterion, verification on whether the first user meets the first criterion, query the user attribute of the first user, determine that the first user corresponds to the first attribute, and then keep the first user in the first group call.

2. The server applies the first criterion to a user not marked with the first attribute.

The server may apply the first criterion to the user not marked with the first attribute, and remove, from the first group call, a user that does not meet the first criterion.

3. If the first criterion is associated with the first information, the server may also mark the first attribute for the target user added to the group call based on the first criterion.

4. Throughout the duration of the group call, the server may regularly or periodically perform detection based on the first criterion, to add, to the first group call, a user that meets the first criterion, and to remove, from the first group call, a participating user that does not meet the first criterion, except a user corresponding to the first attribute.

For an operation of triggering, by the server, another user to be added to the first group call, refer to the foregoing steps 504a to 506a, 504b to 506b, or 504c to 506c. Details are not described herein again.

In addition, that the server removes, from the first group call, the user that does not meet the first criterion, for example, a second user, may include: The server sends an ad hoc group remove request message to a terminal of the second user, and then receives an ad hoc group remove response message, to remove the terminal from the first group call.

512: The server sends an ad hoc group communication update response message to the first terminal.

Optionally, the server may send the ad hoc group communication update response message to the first terminal, where the message may notify the first terminal of information such as new users that join the first group call and users that are removed from the first group call.

513: The first terminal sends an ad hoc group communication update request message to the server.

Parallel to step 510, in this step, the first terminal or another authorized terminal may send the ad hoc group communication update request message to the server, where the request message may carry a list of to-be-added users and/or a list of to-be-removed users, and is for updating participating users in the first group call.

Alternatively, in another possible implementation, the ad hoc group communication update request message is only for updating user attributes of some users in the group call. For example, the request message may carry an identity of a to-be-updated user (a user in the first group call), and a user attribute corresponding to the to-be-updated user is the first attribute. For example, when a user initially sets up the group call, a to-be-added user marked with the first attribute does not exist, and a user attribute of the user may be updated to the first attribute in the update manner described in step 513, so that the user may be used as an essential user in the first group call, and is not affected by another user filtering condition. In this manner, the user can flexibly set an update attribute of a specific user, thereby improving flexibility and convenience of updating users in the group call.

Optionally, the ad hoc group communication update request message sent by the first terminal may include the list of to-be-added users, where the list of to-be-added users includes an identity of at least one to-be-added user. Optionally, the first attribute corresponding to the to-be-added user may be included, and indicates that the to-be-added user is an essential user in the first group call and is not allowed to be removed from the first group call by applying any user criterion. Neither the currently existing user criterion nor a user criterion to be added in the future is applied to the to-be-added user.

Optionally, the ad hoc group communication update request message sent by the first terminal may include the list of to-be-removed users, where the list of to-be-removed users includes an identity of at least one to-be-removed user. Optionally, the second attribute corresponding to the to-be-removed user may be included, and indicates that the to-be-removed user is a released user in the first group call and is not allowed to be added to the first group call by applying any user criterion. Neither the currently existing user criterion nor the user criterion to be added in the future is applied to the to-be-removed user.

For example, in the ad hoc group communication update request message, the list of to-be-removed user includes the identity of the third terminal.

514: The server sends an ad hoc group communication remove request message to the third terminal.

Specifically, the ad hoc group communication remove request message may be an ad hoc group call leave request message or an ad hoc group call remove request message.

515: The third terminal sends an ad hoc group communication remove response message to the server.

The response message may indicate that the third terminal receives the ad hoc group communication remove request message, and is for determining to remove the third terminal from the first group call.

516: The server sends an ad hoc group communication update response message to the first terminal.

Optionally, the server may send the ad hoc group communication update response message to the first terminal, where the message may notify the first terminal of information such as new users that join the first group call and users that are removed from the first group call.

Optionally, step 510 and step 513 may be combined into a same message for implementation.

In the foregoing implementation, the terminal side includes a user attribute in a group call setup request or update request message, so that the server can manage participating users in a group call based on the user attribute, and does not apply a user criterion to the participating users. In this way, the update manner based on a user list and the update manner based on the user criterion do not conflict, and can be both applied to user management of the group call, thereby improving flexibility and communication efficiency of a group call service.

Embodiment 2: A server generates a user attribute for a to-be-added user and/or a to-be-removed user based on a user list.

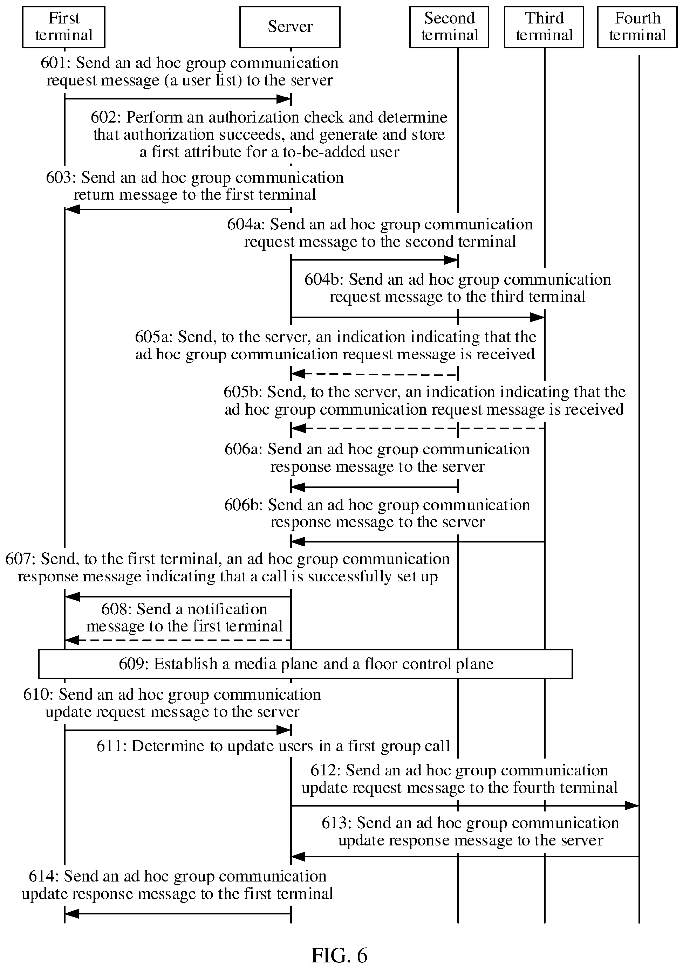

As shown in FIG. 6, the communication method may include the following steps.

601: A first terminal sends an ad hoc group communication request message to the server.

A group call initiating user terminal, namely, the first terminal, sends the ad hoc group communication request (ad hoc group call request) message to the server, where the request includes a list of users that need to be added to a group call.

For example, the user list may include user identities corresponding to a second terminal and a third terminal.

602: The server performs an authorization check and determines that authorization succeeds, and generates and stores a first attribute for a to-be-added user.

A server side automatically generates and stores, for the to-be-added user, the first attribute of the to-be-added user based on the list of to-be-added users that is received from the first terminal. For example, the first attribute may be specifically marked as always-in or keep-in, or marked as that the user is not affected by a user criterion, the user criterion is not applied to the user, or the like. This is not limited in this application.

603: The server sends an ad hoc group communication return message to the first terminal.

604a: The server sends an ad hoc group communication request message to the second terminal.

604b: The server sends an ad hoc group communication request message to the third terminal.

605a: The second terminal sends, to the server, an indication indicating that the ad hoc group communication request message is received.

605b: The third terminal sends, to the server, an indication indicating that the ad hoc group communication request message is received.

606a: The second terminal sends an ad hoc group communication response message to the server.

606b: The third terminal sends an ad hoc group communication response message to the server.

607: The server sends, to the first terminal, an ad hoc group communication response message indicating that the call is successfully set up.

608: The server sends a notification message to the first terminal.

609: Establish a media plane and a floor control plane.

Refer to the foregoing steps 503 to 509.

Optionally, the foregoing implementation process of setting up the group call may alternatively be implemented in a manner of providing a user criterion by the terminal. The server may add a user based on the user criterion specified by the terminal, set up a first group call, and continuously update participating users in the first group call based on the user criterion.

610: The first terminal sends an ad hoc group communication update request message to the server.

Optionally, the ad hoc group communication update request message may include an identity of the to-be-added user and/or include an identity of a to-be-removed user, and is for requesting the to-be-added user to be added to the first group call and/or is for requesting the to-be-removed user to be removed from the first group call.

611: The server determines to update users in the first group call.

In this case, the server may perform the following operations:
1. For the to-be-added user in step 610, the server adds the to-be-added user to the first group call, and marks a user attribute as the first attribute.
   Subsequently, throughout the duration of the group call, regardless of whether a user criterion is added to the first group call in the foregoing steps 601 to 609, or whether a user criterion is added to the first group call after step 610, a user terminal marked with the first attribute is kept in the first group call, and any user criterion is not applied to the user terminal marked with the first attribute, that is, the user terminal is not allowed to be removed from the first group call because the user terminal does not meet the user criterion.
2. For the to-be-removed user in step 610, the server removes the to-be-removed user from the first group call, and marks a user attribute as a second attribute.

Subsequently, throughout the duration of the group call, regardless of whether a user criterion is added to the first group call in the foregoing steps 601 to 609, or whether a user criterion is added to the first group call after step 610, a user terminal marked with the first attribute is kept in the first group call, and any user criterion is not applied to the user terminal marked with the second attribute, that is, the user terminal is not allowed to be added to the first group call because the user terminal does not meet the user criterion.

Optionally, the server removes the to-be-removed user from the first group call, and the server may no longer evaluate whether the user meets the user criterion, or even if the user meets the user criterion, the server does not actively add the user terminal marked with the second attribute to the first group call. Unless the server receives an update request of an authorized terminal again, the user terminal is requested to be added to the first group call again in an update manner of adding a user list.

For example, the identity of the to-be-added user included in the ad hoc group communication update request message is an identity of a fourth terminal. The communication method may specifically include the following steps.

612: The server sends an ad hoc group communication update request message to the fourth terminal.

Specifically, the request message may include a group call identity (ad hoc group ID) and a preconfigured group identity (group ID).

613: The fourth terminal sends an ad hoc group communication update response message to the server.

The response message may indicate that the fourth terminal accepts or rejects the group call.

For a specific process, refer to the foregoing steps 504a to 506a, 504b to 506b, or 504c to 506c. Details are not described herein again.

614: The server sends an ad hoc group communication update response message to the first terminal.

Optionally, the server may send the ad hoc group communication update response message to the first terminal, where the message may notify the first terminal of information such as new users that join the first group call and users that are removed from the first group call. Based on the foregoing example, the response message may notify the first terminal that the fourth terminal is successfully added to the first group call.

In addition, if the ad hoc group communication update request message includes the to-be-removed user, for a process of removing a user terminal, refer to steps 514 and 515 in the foregoing embodiment. Details are not described herein again.

In the foregoing implementation, when the terminal sets up a group call or updates users in the group call based on a user list, the server may automatically generate a corresponding user attribute for a to-be-added user or a to-be-removed user, or mark specific indication information, so that the server can manage participating users in the group call, and does not apply a user criterion to the participating users. In this way, the update manner based on the user list and the update manner based on the user criterion do not conflict, and can be both applied to user management of the group call, thereby improving flexibility and communication efficiency of a group call service. In addition, compared with Embodiment 1, in this implementation, a terminal side does not need to include a user attribute, thereby reducing signaling overheads, avoiding improvement and function enhancement of the terminal side, and improving feasibility of the solution.

Embodiment 3: A terminal indicates first information to a user criterion, so that a target user determined based on the user criterion is an essential user in a group call.

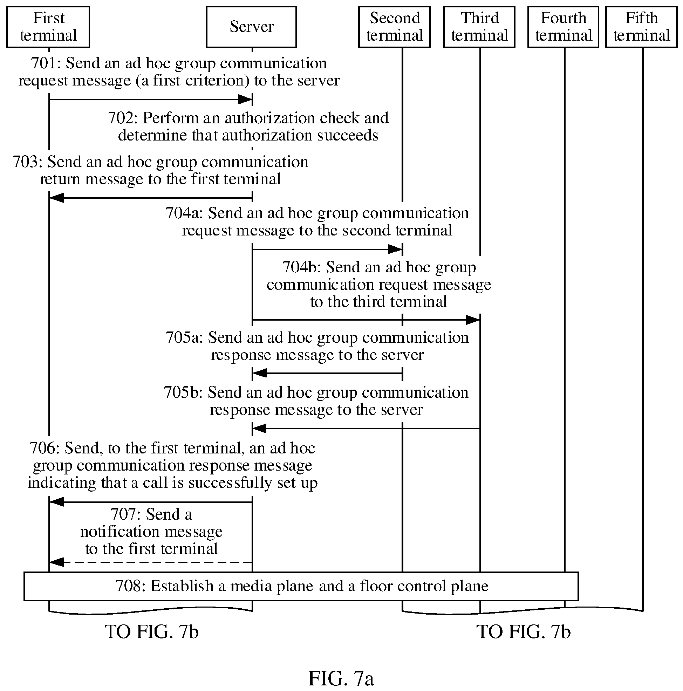

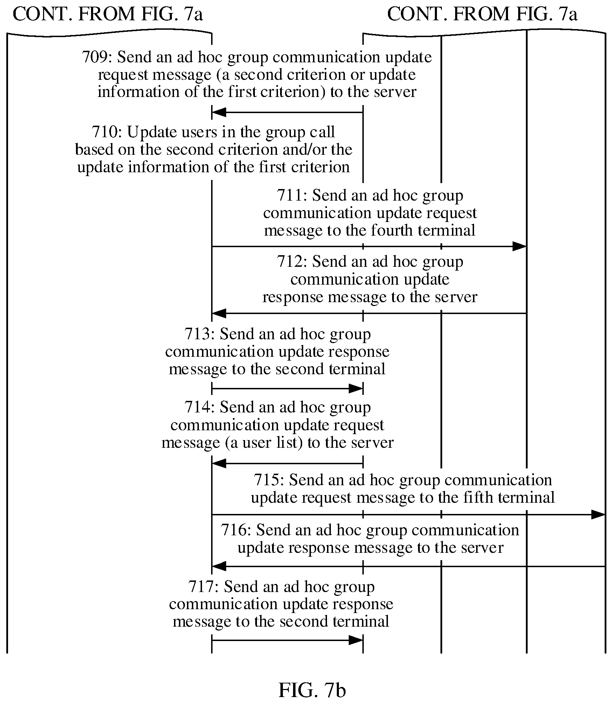

As shown in FIG. 7a and FIG. 7b, the communication method may include the following steps.

701: A first terminal sends an ad hoc group communication request message to a server.

A group call initiating user terminal, namely, the first terminal, sends the ad hoc group communication request (ad hoc group call request) message to the server, where the request includes information about at least one user criterion, for example, information about a first criterion, and indicates the server to perform user filtering based on the first criterion, add, to a group call, a target user that meets the first criterion, and set up a first group call.

Optionally, the request message may further include first information corresponding to the first criterion, where the first information indicates that a target user added based on the first criterion is an essential user in the first group call. A function of the first information is similar to that of the foregoing user attribute being a first attribute, and may be understood as follows: A user attribute of the target user added to the first group call based on the first criterion may be the first attribute, for example, may be marked as always-in; the target user added based on the first criterion should be kept in the first group call all the time; or another user criterion is not allowed to be applied to the target user determined based on the first criterion. Neither the currently existing user criterion in the first group call nor a user criterion to be added to the first group call in the future is applied to the target user, that is, none of other user criteria can be valid for the target user.

Optionally, the request information further includes second information corresponding to the first criterion, where the second information indicates that an attribute of the first criterion is read-only or modifiable.

702: The server performs an authorization check and determines that authorization succeeds.

Refer to the foregoing step 502.

The server stores the first criterion. Optionally, the server stores the first information and the second information that are associated with the first criterion.

703: The server sends an ad hoc group communication return message to the first terminal.

Refer to the foregoing step 503.

704a: The server sends an ad hoc group communication request message to the second terminal.

704b: The server sends an ad hoc group communication request message to the third terminal.

Specifically, the server may select, based on the first criterion in step 701, a user terminal that meets the first criterion. If determining that the second terminal and the third terminal meet the first criterion, the server may send the ad hoc group communication request message to the second terminal and the third terminal, to request access to the group call. The request message may include a group call identity (ad hoc group ID) and a preconfigured group identity (group ID).

705a: The second terminal sends an ad hoc group communication response message to the server.

705b: The third terminal sends an ad hoc group communication response message to the server.

706: The server sends an ad hoc group communication response message to the first terminal.

Optionally, the response message may further include information such as a user terminal that has joined the group call session, a user terminal that does not join the group call session, or a user terminal that rejects accepting the group call.

707: The server sends a notification message to the first terminal.

708: Establish a media plane and a floor control plane.

The media plane and the floor control plane are established. Users in the group call may speak and perform group communication by using a floor control mechanism.

709: The second terminal sends an ad hoc group communication update request message to the server.

Based on a service requirement of group communication, the second terminal, as an authorized user, expects update of participating users in the current first group call, and the participating users in the first group call may be updated in at least one of the manners such as modifying the first criterion, adding a second criterion, or a list of to-be-added users and/or a list of to-be-removed users.

For example, in step 709 in this embodiment, an update manner of adding the second criterion and/or indicating update information of the first criterion may be used as an example for description. In subsequent step 714, an update manner of adding a user list (a list of to-be-added users and/or to-be-removed users) is used as an example for description.

For example, the ad hoc group communication update request message in step 709 may include information about the second criterion and/or include the update information of the first criterion. For example, the ad hoc group communication update request message may be specifically a modify ad hoc group call criteria message or a modify ad hoc group call participant message.

Optionally, the second criterion in the update request message may further correspond to the first information, to indicate that a target user added by the server based on the second criterion is an essential user in the first group call and is not allowed to be removed by applying another user criterion.

Optionally, the second criterion in the update request message may further correspond to the second information, to indicate that an attribute of the second criterion is read-only or modifiable.

710: The server updates users in the group call based on the second criterion and/or the update information of the first criterion.

Optionally, the server performs an authorization check on the request message, and when determining that the second terminal is authorized to execute the request, determines that the authorization succeeds.

Specifically, the server updates the first criterion based on the update information of the first criterion, adds, to the first group call, a target user that meets an updated first criterion, and removes, from the first group call, a participating user that does not meet the updated first criterion.

Optionally, the server performs user filtering based on the second criterion, adds, to the first group call, a target user that meets the second criterion, and removes, from the first group call, a participating user that does not meet the second criterion.

The server may specifically include the following several types of processing.
1. For the first criterion marked with the first information, the server does not apply the first criterion to a target user corresponding to the first criterion.

The target user corresponding to the first criterion may be a target user that is selected by the server based on the first criterion and that meets the first criterion. The server automatically adds the target user corresponding to the first criterion to the first group call.

The first criterion is marked with the first information, for example, always-in. Therefore, the server no longer checks whether the target user corresponding to the existing first criterion meets the first criterion or the second criterion, that is, the target user corresponding to the first criterion does not need to be removed even if the target user corresponding to the first criterion does not meet the second criterion.

2. If the update request message includes the information about the second criterion, the server performs user filtering based on the second criterion, and may add, to the first group call, a target user that meets the second criterion, and removes, from the first group call, a user that does not meet the second criterion. The server does not apply the second criterion to a user whose user attribute is marked as the first attribute or a second attribute, and does not apply the second criterion to the target user corresponding to the first criterion marked with the first information.

3. If the update request message includes the update information of the first criterion, the server first determines whether the attribute of the first criterion is read-only or modifiable. Optionally, the server further determines an identity of a user authorized to modify the attribute.

If the attribute of the first criterion is modifiable and the second terminal is allowed to modify the first criterion, the server may modify the first criterion based on the update information. For example, the server may update the original first criterion to a new first criterion based on the update information.

In this case, the first criterion is marked with the first information, for example, always-in. Therefore, the server does not apply the new first criterion to the target user corresponding to the old first criterion, and does not apply the old first criterion to a target user corresponding to the new first criterion.

In other words, the server may no longer check whether the target user added to the first group call based on the original first criterion meets the new first criterion or the old first criterion, that is, the target user corresponding to the old first criterion is not allowed to be removed from the first group call even if the target user corresponding to the old first criterion does not meet the new first criterion or the newly added second criterion.

For example, the original first criterion corresponds to a parameter 1, and the new first criterion corresponds to a parameter 2. If a first user in the first group call meets the parameter 1 but does not meet the parameter 2, the server keeps the first user in the first group call. In addition, if the server detects that another new user meets the parameter 2, the server may add the user to the first group call. If a second user does not meet the parameter 1 but meets the parameter 2, the server adds the second user to the first group call.

4. Throughout the duration of the first group call, the server may regularly or periodically perform detection based on the updated new first criterion and/or the second criterion, to add, to the first group call, a user that meets the new first criterion, and to add, to the first group call, a user that meets the second criterion.

For example, the server determines that a fourth terminal meets the second criterion and needs to be added to the first group call, the following steps are performed.

711: The server sends an ad hoc group communication update request message to the fourth terminal.

712: The fourth terminal sends an ad hoc group communication update response message to the server.

The response message indicates that the fourth terminal accepts or rejects the group call.

713: The server sends an ad hoc group communication update response message to the second terminal.

714: The second terminal sends an ad hoc group communication update request message to the server.

Parallel to step 709, in this step, the update request message may include a list of to-be-added users and/or a list of to-be-removed users, and is for updating participating users in the first group call.

Optionally, the update request message may further include: A to-be-added user corresponds to the first attribute, and/or to-be-removed user corresponds to the second attribute. It can be learned from the foregoing descriptions that the to-be-added user is an essential user in the first group call and is not removed by applying any user criterion; and the to-be-removed user is a released user in the first group call and is not added to the first group call by applying any user criterion.

For example, if the to-be-added user included in the update request message is a user associated with a fifth terminal, the communication party further includes the following steps.

715: The server sends an ad hoc group communication request message to the fifth terminal.

716: The fifth terminal sends an ad hoc group communication response message to the server.

The response message indicates that the fifth terminal accepts or rejects the group call.

717: The server sends an ad hoc group communication update response message to the second terminal.

Optionally, the server may send the ad hoc group communication update response message to a group call initiator, namely, the first terminal, where the message may notify the first terminal of information such as new users that join the first group call and users that are removed from the first group call.

Optionally, step 709 and step 714 may be combined into a same message for implementation.

In addition, this application further provides another implementation. A terminal requests a server to deactivate a user criterion corresponding to a first group call, so that a network device may update, based on the request of the terminal, a status of the user criterion corresponding to the first group call to an inactive state. For example, specifically, the user criterion may be marked as undergoing processing like freezing (freeze), deactivation (de-active), disabling (disable), or suspension (suspend), to indicate that use of the user criterion is stopped. The server does not remove the user criterion, but may record the status of the user criterion.

In this case, when a group call initiating user or another authorized user requests update of users in the first group call, the user criterion in the inactive state may not be applied to a to-be-updated user. In other words, the user criterion in the inactive state is invalid for the to-be-updated user.

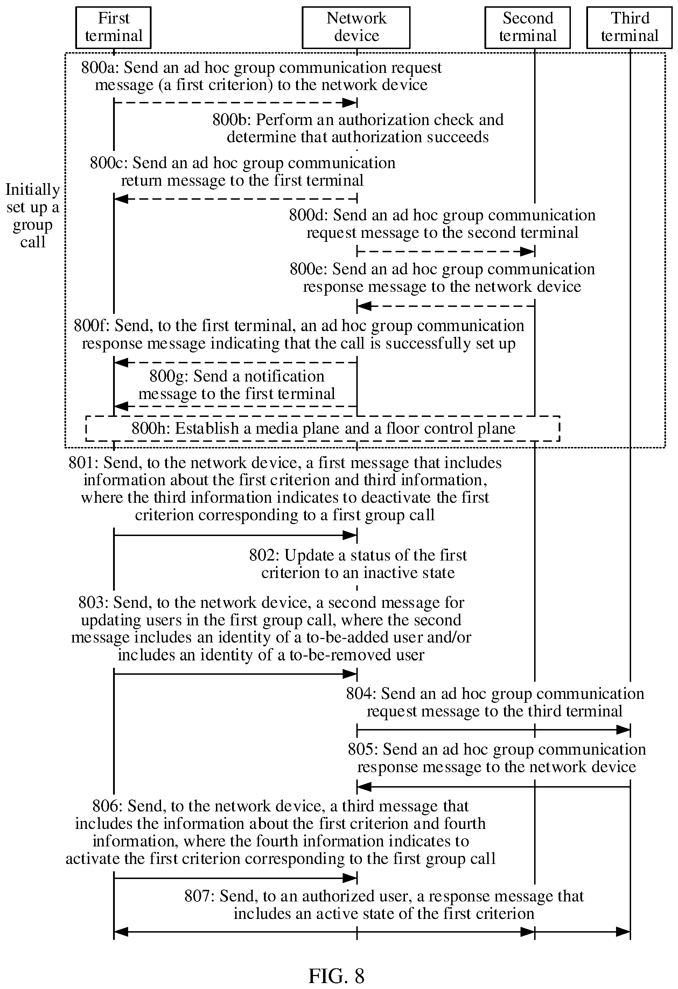

With reference to FIG. 8, the following describes a specific implementation by using Embodiment 4.

Embodiment 4: A terminal requests a network device to deactivate a user criterion.

As shown in FIG. 8, the communication method may include the following steps.

801: A first terminal sends, to the network device, a first message that includes information about a first criterion and third information, where the third information indicates to deactivate the first criterion corresponding to a first group call.

802: The network device updates a status of the first criterion to an inactive state.

Optionally, the network device may send, to an authorized terminal in the first group call, a response message indicating an activation status of the first criterion. Specifically, the response message may include that the first criterion is in the inactive state.

In an implementation, before step 801, the first group call has been set up, and may be set up by the server based on the first criterion configured by the terminal. The following process may be included.

800a: The first terminal sends an ad hoc group communication request message to the network device.

The first terminal sends the ad hoc group communication request (ad hoc group call request) message to the network device, where the request includes information about at least one user criterion, for example, information about a first criterion, and indicates the network device to perform user filtering based on the first criterion, add, to a group call, a target user that meets the first criterion, and set up a first group call.

800b: The network device an authorization check and determines that authorization succeeds.

Refer to the foregoing step 502. The network device stores the first criterion.

800c: The network device sends an ad hoc group communication return message to the first terminal.

Refer to the foregoing step 503.

For example, the network device detects that a second terminal meets the first criterion.

800d: The network device sends an ad hoc group communication request message to the second terminal.

800e: The second terminal sends an ad hoc group communication response message to the network device.

The response message indicates that the second terminal accepts or rejects the group call.

800f: The network device sends, to the first terminal, an ad hoc group communication response message indicating that the call is successfully set up.

Optionally, the response message may further include information such as a user terminal that has joined the group call session, a user terminal that does not join the group call session, or a user terminal that rejects accepting the group call.

800g: The network device sends a notification message to the first terminal.

800h: Establish a media plane and a floor control plane.

The media plane and the floor control plane are established. Users in the group call may speak and perform group communication by using a floor control mechanism.

It should be understood that, as described in step 802, that the network device sends, to the user in the first group call, the response message indicating the activation status of the first criterion may specifically include: The network device sends a notification message to the second terminal. The second terminal is the authorized terminal in the first group call.

In this case, based on a service requirement of group communication, the first terminal updates of participating users in the current first group call, and the following steps are included.

803: The first terminal sends, to the network device, a second message for updating users in the first group call, where the second message includes an identity of a to-be-added user and/or includes an identity of a to-be-removed user.

The first criterion is invalid for the to-be-added user and the to-be-removed user. In other words, the network device directly adds the to-be-added user to the first group call without determining whether the to-be-added user meets the first criterion. In addition, the network device may directly remove the to-be-removed user from the first group call without determining whether the to-be-removed user meets the first criterion.

For example, the to-be-added user included in the second message is a third terminal. The method further includes the following steps.

804: The network device sends an ad hoc group communication request message to the third terminal.

805: The third terminal sends an ad hoc group communication response message to the network device.

The response message indicates that the third terminal accepts or rejects the group call.

Subsequently, based on the service requirement of group communication, when users in the first group call need to be updated based on the first criterion, an initiating user or an authorized user in the first group call may send, to the network device, a request indicating to activate the first criterion. Specifically, the following steps may be included.

806: The first terminal sends, to the network device, a third message that includes the information about the first criterion and fourth information, where the fourth information indicates to activate the first criterion corresponding to the first group call.

For example, the third message sent by the first terminal to the network device may be specifically an ad hoc group call criteria update or modify ad hoc group call criteria message. The message may include the fourth information, where the fourth information may specifically indicate to unfreeze (unfreeze), activate (active), enable (enable), or resume (resume) the first criterion in the first group call.

In this case, the network device may continuously perform user filtering based on the first criterion, add, to the first group call, a user that meets the first criterion, remove, from the first group call, a participating user that does not meet the first criterion, and update the status of the first criterion to an active state.

807: The network device sends, to the authorized user, a response message that includes the active state of the first criterion.

Optionally, the network device may send the response message to the authorized user corresponding to the first group call, and optionally, may include a latest status of the user criterion in the first group call. For example, the first criterion is in the active state, so that another user perceives that the first criterion is restored and the first criterion may be modified.

For example, if the authorized user in the first group call includes the first terminal, the second terminal, and the third terminal, the network device sends the response message to the terminals, to notify the terminal that the activation status of the first criterion is active.

In the foregoing implementation, the terminal may request the network device to modify or set an activation status of a user criterion in a group call, so that the user criterion is in an inactive state in a period of time. In this way, the authorized terminal may flexibly update participating users in the group call as required, for example, add or remove a user based on a user list, without being affected by the user criterion. This improves flexibility of updating participating users in the group call, and improves communication efficiency of the group call, thereby improving user experience.

Embodiments mentioned above in this application may be combined when the solutions do not conflict. This is not limited.

The foregoing mainly describes the solutions provided in this application from a perspective of interaction between nodes. Correspondingly, this application further provides a communication apparatus. The communication apparatus may be the network device in the foregoing method embodiments, a node or a device including the network device, or a component that can be used in the network device. Alternatively, the communication apparatus may be the terminal in the foregoing method embodiments, a node or a device including the terminal, or a component that can be used in the terminal.

It may be understood that, to implement the foregoing functions, the communication apparatus includes corresponding hardware structures and/or software modules for performing the functions. A person skilled in the art should easily be aware that, in combination with units and algorithm operations of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

It should be understood that the foregoing describes interaction between nodes by only using the network device and the terminal as an example. Actually, processing performed by the network device is not limited to being performed by only a single node, and processing performed by the terminal is not limited to being performed by only a single node.

In this application, the communication apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It may be understood that division into the modules in this application is an example, and is merely logical function division. In actual implementation, there may be another division manner.

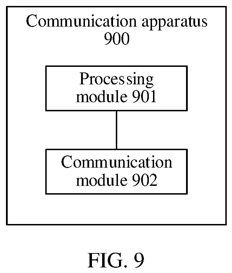

For example, when functional modules are obtained through division in an integrated manner, FIG. 9 is a diagram of a structure of a communication apparatus 900. The communication apparatus 900 may include a processing module 901 and a communication module 902.

In some embodiments, the communication apparatus 900 may further include a storage module (not shown in FIG. 9), configured to store program instructions and data.

For example, the communication apparatus 900 may be configured to implement a function of a terminal. The communication apparatus 900 is, for example, the terminal described in the embodiments in FIG. 4 to FIG. 7b, or may be the MC client on the terminal.

The processing module 901 may be configured to generate a first message, where the first message is for updating users in a first group call, and the first message includes an identity of a to-be-added user and a user attribute of the to-be-added user, and/or an identity of a to-be-removed user and a user attribute of the to-be-removed user.

The communication module 902 is configured to send the first message to a network device.

In an implementation, if the user attribute of the to-be-added user is a first attribute, the first attribute indicates at least one of the following information: the to-be-added user is an essential user in the first group call; the to-be-added user is kept in the first group call before the first group call ends; the to-be-added user cannot be removed before the first group call ends; or a user criterion corresponding to the first group call is not applied to the to-be-added user, where the user criterion is used by the network device to update users in the first group call.

In an implementation, if the user attribute of the to-be-removed user is a second attribute, the second attribute indicates at least one of the following information: the to-be-removed user is a released user in the first group call; the to-be-removed user is no longer an essential user in the first group call; the to-be-added user is not allowed to be added by the network device to the first group call based on the user criterion corresponding to the first group call; or the user criterion corresponding to the first group call is not applied to the to-be-removed user, where the user criterion is used by the network device to update users in the first group call.

In an implementation, the communication module 902 is configured to send a second message to the network device, where the second message includes an identity of at least one target user, and the second message is for requesting the first group call to be set up and the target user to be added to the first group call.

In an implementation, the second message further includes a first attribute corresponding to the target user.

In an implementation, the communication module 902 is configured to send a third message to the network device, where the third message includes information about a first criterion, the third message is for requesting the first group call to be set up, the first criterion is one of user criteria, and the first criterion is for adding, to the first group call, a user that meets the first criterion, and removing, from the first group call, a participating user that does not meet the first criterion.

In an implementation, the third message further includes first information, where the first information indicates that a target user selected based on the first criterion is an essential user in the first group call.

In an implementation, the third message further includes second information, where the second information indicates that an attribute of the first criterion is read-only or modifiable.

In an implementation, the communication module 902 is configured to send a fourth message to the network device, where the fourth message includes information about a second criterion or includes update information of the first criterion, the second criterion or the update information is for updating users in the first group call, the second criterion is one of the user criteria, and the second criterion is for adding, to the first group call, a user that meets the second criterion, and removing, from the first group call, a participating user that does not meet the second criterion.

In an implementation, the communication module 902 is configured to receive, from the network device, a response message indicating a user update result in the first group call.

In addition, the communication apparatus 900 may be configured to implement a function of a network device. The communication apparatus 900 is, for example, the network device or the server in the embodiments in FIG. 4 to FIG. 7b, and may be specifically an MC server.

The communication module 902 is configured to receive a first message from a first terminal, where the first message is for updating users in a first group call, and the first message includes an identity of a to-be-added user and/or an identity of a to-be-removed user.

The processing module 901 is configured to determine a user attribute of the to-be-added user, and add the to-be-added user to the first group call based on the first message; and/or determine a user attribute of the to-be-removed user, and remove the to-be-removed user from the first group call based on the first message.

In an implementation, if the user attribute is a first attribute, the first attribute indicates at least one of the following information: the to-be-added user is an essential user in the first group call; the to-be-added user is kept in the first group call before the first group call ends; the to-be-added user cannot be removed before the first group call ends; or a user criterion corresponding to the first group call is not applied to the to-be-added user, where the user criterion is used by the network device to update users in the first group call.

In an implementation, if the user attribute is a second attribute, the second attribute indicates at least one of the following information: the to-be-removed user is a released user in the first group call; the to-be-removed user is no longer an essential user in the first group call; the to-be-removed user is not allowed to be added by the network device to the first group call based on the user criterion corresponding to the first group call; or the user criterion corresponding to the first group call is not applied to the to-be-removed user, where the user criterion is used by the network device to update users in the first group call.

In an implementation, the first message includes the user attribute of the to-be-added user and/or the user attribute of the to-be-removed user.

In an implementation, the processing module 901 is configured to generate, based on the first message for the to-be-added user, a first attribute of the to-be-added user, and/or generate, based on the first message for the to-be-removed user, a second attribute of the to-be-removed user.

In an implementation, the communication module 902 is configured to receive a second message from the first terminal or a second terminal, where the second message includes an identity of at least one target user, and the at least one target user includes a user associated with the first terminal. The processing module 901 is configured to add the target user to the first group call, and set up the first group call.

In an implementation, the second message further includes a first attribute corresponding to the target user.

In an implementation, the communication module 902 is configured to receive a third message from the first terminal or a second terminal, where the third message includes information about a first criterion. The processing module 901 is configured to add, to the first group call, a target user that meets the first criterion, and set up the first group call.

In an implementation, the processing module 901 is configured to update participating users in the first group call, add, to the first group call, the target user that meets the first criterion, and remove, from the first group call, a user that does not meet the first criterion; if a user attribute corresponding to a first user in the first group call is the first attribute, keep the first user in the first group call; and if a second user meets the first criterion, and a user attribute corresponding to the second user is the second attribute, remove the second user from the first group call, or skip adding the second user to the first group call.

In an implementation, the third message further includes second information indicating that an attribute of the first criterion is read-only or modifiable.

In an implementation, the communication module 902 is configured to receive a fourth message from a terminal, where the fourth message includes information about a second criterion and/or includes update information of the first criterion. The processing module 901 is configured to: based on the second criterion or the update information, add, to the first group call, a target user that meets the second criterion or the update information, and remove, from the first group call, a participating user that does not meet the second criterion.

In an implementation, the processing module 901 is configured to store a user list corresponding to the first group call, and a user attribute corresponding to a user in the user list; store the first attribute in the first group call and a user list corresponding to the first attribute; store the second attribute in the first group call and a user list corresponding to the second attribute; and/or store at least one user criterion corresponding to the first group call, and first information corresponding to the user criterion, where the first information indicates that a target user determined based on the user criterion is an essential user in the first group call.

In an implementation, the communication module 902 is configured to send, to the first terminal, a response message indicating a user update result in the first group call.

In addition, the communication apparatus 900 may be configured to implement a function of a terminal. The communication apparatus 900 is, for example, the terminal in the embodiment in FIG. 8, or may be the MC client on the terminal.

The communication module 902 is configured to send a first message to a network device, where the first message includes information about a first criterion and third information, the third information indicates to deactivate the first criterion corresponding to a first group call, and the first criterion is for adding, to the first group call, a user that meets the first criterion, and removing, from the first group call, a participating user that does not meet the first criterion; and send a second message to the network device, where the second message is for updating users in the first group call, the second message includes an identity of a to-be-added user and/or includes an identity of a to-be-removed user, and the first criterion is invalid for the to-be-added user and the to-be-removed user.

In an implementation, the to-be-added user meets at least one of the following: the to-be-added user is an essential user in the first group call; the to-be-added user is kept in the first group call before the first group call ends; the to-be-added user cannot be removed before the first group call ends; or the first criterion is not applied to the to-be-added user.

In an implementation, the to-be-added user meets at least one of the following: the to-be-removed user is a released user in the first group call; the to-be-removed user is no longer an essential user in the first group call; the to-be-added user is not allowed to be added by the network device to the first group call based on the first criterion; or the first criterion is not applied to the to-be-removed user.

In an implementation, the communication module 902 is further configured to send a third message to the network device, where the third message includes the information about the first criterion and fourth information, and the fourth information indicates to activate the first criterion corresponding to the first group call.

In an implementation, the communication module 902 is further configured to receive, from the network device, a response message that includes an active state of the first criterion.

In addition, the communication apparatus 900 may be configured to implement a function of a network device. The communication apparatus 900 is, for example, the network device in the embodiment in FIG. 8, and may be specifically an MC server.

The communication module 902 is configured to receive a first message from a terminal, where the first message includes information about a first criterion and third information, the third information indicates to deactivate the first criterion, and the first criterion is for adding, to a first group call, a user that meets the first criterion, and removing, from the first group call, a participating user that does not meet the first criterion.

The processing module 901 is configured to receive a second message from the terminal, where the second message is for updating users in the first group, and the second message includes an identity of at least one to-be-added user and/or includes an identity of at least one to-be-removed user; and add the to-be-added user to the first group call based on the second message, where the to-be-added user is an essential user in the first group call; and/or remove the to-be-removed user from the first group call.

In an implementation, the to-be-added user meets at least one of the following: the to-be-added user is an essential user in the first group call; the to-be-added user is kept in the first group call before the first group call ends; the to-be-added user cannot be removed before the first group call ends; or the first criterion is not applied to the to-be-added user.

In an implementation, the to-be-removed meets at least one of the following: the to-be-removed user is a released user in the first group call; the to-be-removed user is no longer an essential user in the first group call; the to-be-added user is not allowed to be added by the network device to the first group call based on the first criterion; or the first criterion is not applied to the to-be-removed user.

In an implementation, if the to-be-added user does not meet the first criterion, a first user is kept in the first group call; and if the to-be-removed user meets the first criterion, the to-be-removed user is removed from the first group call, or the to-be-removed user is not added to the first group call.

In an implementation, the processing module 901 is configured to update a status of the first criterion to an inactive state.

In an implementation, the communication module 902 is further configured to receive a third message from the terminal, where the third message includes the information about the first criterion and fourth information, and the fourth information indicates to activate the first criterion. The processing module 901 is configured to add, to the first group call, a user that meets the first criterion, remove, from the first group call, a participating user that does not meet the first criterion, and update a status of the first criterion to an active state.

In an implementation, the communication module 902 is further configured to send, to an authorized terminal in the first group call, a response message that includes the active state of the first criterion.

In a simple embodiment, a person skilled in the art may figure out that the communication apparatus 900 may be in a form shown in FIG. 3. For example, the processor 301 in FIG. 3 may invoke the computer-executable instructions stored in the memory 303, to cause the communication apparatus 900 to perform the method in the foregoing method embodiments.

For example, a function/implementation process of the processing module 901 in FIG. 9 may be implemented by the processor 301 in FIG. 3.

For example, a function/implementation process of the communication module 902 in FIG. 9 may be implemented by the communication interface 304 in FIG. 3.

It may be understood that one or more of the foregoing modules or units may be implemented by using software, hardware, or a combination thereof. When any one of the foregoing modules or units is implemented by software, the software exists in a form of computer program instructions, and is stored in the memory. The processor may be configured to execute the program instructions and implement the foregoing method procedure. The processor may be built into a SoC (system-on-a-chip) or an ASIC, or may be an independent semiconductor chip. In addition to the core configured to perform operations or processing by executing the software instructions, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, this application further provides a chip system, including at least one processor and an interface. The at least one processor is coupled to a memory through the interface, and when the at least one processor executes a computer program or instructions in the memory, the method in any one of the foregoing method embodiments is performed. In a possible implementation, the chip system further includes the memory. Optionally, the chip system may include a chip, or may include a chip and another discrete device. This is not specifically limited in this application.

Optionally, this application further provides a computer-readable storage medium. All or part of procedures in the foregoing method embodiments may be implemented by a computer program instructing related hardware. The program may be stored in the foregoing computer-readable storage medium. When the program is executed, the procedures in the foregoing method embodiments may be performed. The computer-readable storage medium may be an internal storage unit of the communication apparatus in any one of the foregoing embodiments, for example, a hard disk drive or a memory of the communication apparatus. Alternatively, the computer-readable storage medium may be an external storage device of the communication apparatus, for example, a plug-in hard disk drive, a smart media card (smart media card, SMC), a secure digital (secure digital, SD) card, or a flash card (flash card) that is configured on the communication apparatus. Further, the computer-readable storage medium may include both an internal storage unit and an external storage device of the communication apparatus. The computer-readable storage medium is configured to store the computer program and store other programs and data that are required by the communication apparatus. The computer-readable storage medium may be further configured to temporarily store data that has been output or is to be output.

Optionally, this application further provides a computer program product. All or part of procedures in the foregoing method embodiments may be implemented by a computer program instructing related hardware. The program may be stored in the computer program product. When the program is executed, the procedures in the foregoing method embodiments may be performed.

Optionally, this application further provides computer instructions. All or part of procedures in the foregoing method embodiments may be completed by computer instructions instructing related hardware (for example, a computer, a processor, a network device, or a terminal). The program may be stored in the computer-readable storage medium or the computer program product.

Optionally, the computer-executable instructions in this embodiment of this application may also be referred to as application program code. This is not specifically limited in embodiments of this application.

Optionally, this application further provides a communication system, including the network device and the terminal in the foregoing embodiments.

The foregoing descriptions about implementations allow a person skilled in the art to understand that, for the purpose of convenient and brief description, division of the foregoing functional modules is taken as an example for illustration. In actual application, the foregoing functions can be allocated to different functional modules and implemented as required, that is, an inner structure of an apparatus is divided into different functional modules to implement all or part of the functions described above.

In the several embodiments provided in this application, it should be understood that the disclosed apparatuses and methods may be implemented in other manners. For example, the described apparatus embodiments are merely examples. For example, division into the modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. All or part of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, wherein the method comprises:
generating a first message, wherein the first message is for updating users in a first group call, and the first message comprises an identity of a to-be-added user and a user attribute of the to-be-added user, and/or an identity of a to-be-removed user and a user attribute of the to-be-removed user; and
sending the first message to a network device.

2. The method according to claim 1, wherein if the user attribute of the to-be-added user is a first attribute, the first attribute indicates at least one of the following information:
the to-be-added user is an essential user in the first group call;
the to-be-added user is kept in the first group call before the first group call ends;
the to-be-added user cannot be removed before the first group call ends; or
a user criterion corresponding to the first group call is not applied to the to-be-added user, wherein the user criterion is used by the network device to update users in the first group call.

3. The method according to claim 1 or 2, wherein if the user attribute of the to-be-removed user is a second attribute, the second attribute indicates at least one of the following information:
the to-be-removed user is a released user in the first group call;
the to-be-removed user is no longer an essential user in the first group call;
the to-be-removed user is not allowed to be added by the network device to the first group call based on the user criterion corresponding to the first group call; or
the user criterion corresponding to the first group call is not applied to the to-be-removed user, wherein the user criterion is used by the network device to update users in the first group call.

4. The method according to any one of claims 1 to 3, wherein the method further comprises:
sending a second message to the network device, wherein the second message comprises an identity of at least one target user, and the second message is for requesting the first group call to be set up and the target user to be added to the first group call.

5. The method according to claim 4, wherein the second message further comprises a first attribute corresponding to the target user.

6. The method according to any one of claims 1 to 3, wherein the method further comprises:
sending a third message to the network device, wherein the third message comprises information about a first criterion, the third message is for requesting the first group call to be set up, the first criterion is one of user criteria, and the first criterion is for adding, to the first group call, a user that meets the first criterion, and removing, from the first group call, a participating user that does not meet the first criterion.

7. The method according to claim 6, wherein the third message further comprises first information, wherein the first information indicates that a target user selected based on the first criterion is an essential user in the first group call.

8. The method according to claim 6 or 7, wherein the third message further comprises second information, wherein the second information indicates that an attribute of the first criterion is read-only or modifiable.

9. The method according to any one of claims 1 to 8, wherein the method further comprises:
sending a fourth message to the network device, wherein the fourth message comprises information about a second criterion or comprises update information of the first criterion, the second criterion or the update information is for updating users in the first group call, the second criterion is one of the user criteria, and the second criterion is for adding, to the first group call, a user that meets the second criterion, and removing, from the first group call, a participating user that does not meet the second criterion.

10. The method according to any one of claims 1 to 9, wherein the method further comprises:
receiving, from the network device, a response message indicating a user update result in the first group call.

11. A communication method, wherein the method comprises:
receiving a first message from a first terminal, wherein the first message is for updating users in a first group call, and the first message comprises an identity of a to-be-added user and/or an identity of a to-be-removed user; and
determining a user attribute of the to-be-added user, and adding the to-be-added user to the first group call based on the first message; and/or
determining a user attribute of the to-be-removed user, and removing the to-be-removed user from the first group call based on the first message.

12. The method according to claim 11, wherein if the user attribute is a first attribute, the first attribute indicates at least one of the following information:
the to-be-added user is an essential user in the first group call;
the to-be-added user is kept in the first group call before the first group call ends;
the to-be-added user cannot be removed before the first group call ends; or
a user criterion corresponding to the first group call is not applied to the to-be-added user, wherein the user criterion is used by a network device to update users in the first group call.

13. The method according to claim 11 or 12, wherein if the user attribute is a second attribute, the second attribute indicates at least one of the following information:
the to-be-removed user is a released user in the first group call;
the to-be-removed user is no longer an essential user in the first group call;
the to-be-removed user is not allowed to be added by the network device to the first group call based on the user criterion corresponding to the first group call; or
the user criterion corresponding to the first group call is not applied to the to-be-removed user, wherein the user criterion is used by the network device to update users in the first group call.

14. The method according to any one of claims 11 to 13, wherein the first message comprises the user attribute of the to-be-added user and/or the user attribute of the to-be-removed user.

15. The method according to any one of claims 11 to 13, wherein determining the user attribute of the to-be-added user comprises:
generating, based on the first message for the to-be-added user, a first attribute of the to-be-added user, and/or generating, based on the first message for the to-be-removed user, a second attribute of the to-be-removed user.

16. The method according to any one of claims 11 to 15, wherein the method further comprises:
receiving a second message from the first terminal or a second terminal, wherein the second message comprises an identity of at least one target user, and the at least one target user comprises a user associated with the first terminal; and
adding the target user to the first group call, and setting up the first group call.

17. The method according to claim 16, wherein the second message further comprises a first attribute corresponding to the target user.

18. The method according to any one of claims 11 to 15, wherein the method further comprises:
receiving a third message from the first terminal or a second terminal, wherein the third message comprises information about a first criterion; and
adding, to the first group call, a target user that meets the first criterion, and setting up the first group call.

19. The method according to claim 18, wherein the method further comprises:
updating participating users in the first group call, adding, to the first group call, the target user that meets the first criterion, and removing, from the first group call, a user that does not meet the first criterion;
if a user attribute corresponding to a first user in the first group call is the first attribute, keeping the first user in the first group call; and
if a second user meets the first criterion, and a user attribute corresponding to the second user is the second attribute, removing the second user from the first group call, or skipping adding the second user to the first group call.

20. The method according to claim 18 or 19, wherein the third message further comprises second information indicating that an attribute of the first criterion is read-only or modifiable.

21. The method according to any one of claims 18 to 20, wherein the method further comprises:
receiving a fourth message from the first terminal, wherein the fourth message comprises information about a second criterion and/or comprises update information of the first criterion; and
based on the second criterion or the update information, adding, to the first group call, a target user that meets the second criterion or the update information, and removing, from the first group call, a participating user that does not meet the second criterion.

22. The method according to any one of claims 11 to 21, wherein the method further comprises:
storing a user list corresponding to the first group call, and a user attribute corresponding to a user in the user list;
storing the first attribute in the first group call and a user list corresponding to the first attribute;
storing the second attribute in the first group call and a user list corresponding to the second attribute; and/or
storing at least one user criterion corresponding to the first group call, and first information corresponding to the user criterion, wherein the first information indicates that a target user determined based on the user criterion is an essential user in the first group call.

23. The method according to any one of claims 11 to 22, wherein the method further comprises:
sending, to the first terminal, a response message indicating a user update result in the first group call.

24. A communication apparatus, wherein the communication apparatus is configured to implement the method according to any one of claims 1 to 23.

25. A communication apparatus, comprising a processor, wherein the processor is coupled to a memory, the memory is configured to store a program or instructions, and when the program or the instructions are executed by the processor, the method according to any one of claims 1 to 23 is performed.

26. A computer-readable storage medium, wherein the computer-readable storage medium stores a computer program or instructions, and when the computer program or the instructions are executed, the method according to any one of claims 1 to 23 is performed.

27. A computer program product, wherein the computer program product comprises computer program code, and when the computer program code is run on a computer, the method according to any one of claims 1 to 23 is performed.
